# EUROPEAN PATENT APPLICATION

(11) **EP 4 722 905 A1**
(43) Date of publication of application: **08.04.2026**
(21) Application number: 23940810.7
(22) Date of filing: 08.06.2023
(51) Int. Cl.: G06F 9/455, G06F 9/38, G06F 13/16, B60K 35/00, B60W 40/02

(54) **SIGNAL PROCESSING APPARATUS AND DISPLAY APPARATUS EQUIPPED WITH SAME FOR VEHICLES**

(71) Applicant: LG Electronics Inc., Yeongdeungpo-gu Seoul 07336 (KR)
(72) Inventor: SOHN, Kiwon, Seoul 06772 (KR); CHOI, Insup, Seoul 06772 (KR); KIM, Seungman, Seoul 06772 (KR); JUNG, Dukyung, Seoul 06772 (KR)
(74) Representative: Vossius & Partner Patentanwälte Rechtsanwälte mbB
(86) International application number: PCT/KR2023/007877
(87) International publication number: WO 2024/253222

(57) **Abstract**

A signal processing device and a vehicle display apparatus including the same are disclosed. The signal processing device according to an embodiment of the present disclosure includes: at least one neural processor; and a central processor configured to execute a hypervisor, wherein the central processor is configured to execute a plurality of virtual machines on the hypervisor, wherein a first virtual machine among the plurality of virtual machines is configured to control the neural processor to operate, or to output result data at a variable frame rate based on sensor data from a sensor device in a vehicle. Accordingly, it is possible to efficiently operate the neural processor.

## Description

### BACKGROUND

### 1. Technical Field

The present disclosure relates to a signal processing device and a vehicle display apparatus including the same, and more particularly to a signal processing device capable of efficiently operating a neural processor, and a vehicle display apparatus including the signal processing device.

### 2. Description of the Related Art

A vehicle is an apparatus that a driver moves in a desired direction. A typical example of the vehicle is an automobile.

Meanwhile, a signal processing device is used for real-time processing of various sensor data during driving of a vehicle.

In this case, as the number of sensor devices increases, the amount of sensor data to be processed in real time also increases.

Meanwhile, Korean Patent No. 10-2463175 (hereinafter referred to as "related art") discloses a method and apparatus for recognizing an object, the method including: extracting, in a neural network, a feature from an input image and generating a feature map; extracting, in parallel with the generating of the feature map, a region of interest (ROI) corresponding to an object of interest from the input image; determining a number of object candidate regions used to detect the object of interest based on a size of the ROI; and recognizing the object of interest from the ROI based on the number of object candidate regions in the neural network.

However, the related art has a drawback in that an input image is processed at a fixed frame rate, which significantly increases processing and results in significant power consumption.

### SUMMARY

It is an objective of the present disclosure to provide a signal processing device capable of efficiently operating a neural processor, and a vehicle display apparatus including the signal processing device.

Meanwhile, it is another objective of the present disclosure to provide a signal processing device capable of efficiently operating a neural processor based on vehicle driving information, and a vehicle display apparatus including the signal processing device.

Meanwhile, it is yet another objective of the present disclosure to provide a signal processing device capable of reducing power consumption, and a vehicle display apparatus including the signal processing device.

Meanwhile, it is yet another objective of the present disclosure to provide a signal processing device capable of using vehicle driving information based on sensor data in various ways, and a vehicle display apparatus including the signal processing device.

In accordance with an aspect of the present disclosure, the above and other objectives can be accomplished by providing a signal processing device including: at least one neural processor; and a central processor configured to execute a hypervisor, wherein the central processor is configured to execute a plurality of virtual machines on the hypervisor, wherein a first virtual machine among the plurality of virtual machines is configured to control the neural processor to operate, or to output result data at a variable frame rate based on sensor data from a sensor device in a vehicle.

Meanwhile, the neural processor can be configured to detect vehicle driving information based on the sensor data, and to operate at the variable frame rate, or to output the result data including the vehicle driving information at the variable frame rate, based on the vehicle driving information.

Meanwhile, the neural processor can be configured to receive the sensor data at a fixed frame rate, to detect vehicle driving information based on the sensor data, and to operate at the variable frame rate, or to output the result data including the vehicle driving information at the variable frame rate, based on the vehicle driving information.

Meanwhile, the first virtual machine among the plurality of virtual machines can be configured to control the neural processor to operate, or to output the result data, at a first frame rate during a first period based on the sensor data, and configured to control the neural processor to operate, or to output the result data, at a second frame rate different from the first frame rate during a second period after the first period based on the vehicle driving information obtained from the sensor data.

Meanwhile, the first virtual machine among the plurality of virtual machines can be configured to: in response to a power saving mode being turned off, control the neural processor to operate, or to output the result data, at a fixed frame rate based on the sensor data; and in response to the power saving mode being turned on, control the neural processor to operate, or to output the result data, at a variable frame rate based on the vehicle driving information obtained from the sensor data.

Meanwhile, the first virtual machine among the plurality of virtual machines can be configured to: in response to the vehicle moving forward, control the neural processor to operate, or to output the result data, at a first frame rate; and in response to the vehicle moving backward, control the neural processor to operate, or to output the result data, at a second frame rate different from the first frame rate based on the vehicle driving information obtained from the sensor data.

Meanwhile, the first virtual machine among the plurality of virtual machines can be configured to: in response to the vehicle traveling at a first speed, control the neural processor to operate, or to output the result data, at a first frame rate; and in response to the vehicle traveling at a second speed greater than the first speed, control the neural processor to operate, or to output the result data, at a second frame rate different from the first frame rate based on the vehicle driving information obtained from the sensor data.

Meanwhile, the first virtual machine among the plurality of virtual machines can be configured to: in response to the vehicle traveling straight, control the neural processor to operate, or to output the result data, at a first frame rate; and in response to the vehicle changing lanes while traveling, control the neural processor to operate, or to output the result data, at a second frame rate different from the first frame rate based on the vehicle driving information obtained from the sensor data.

Meanwhile, the first virtual machine among the plurality of virtual machines can be configured to: in response to the vehicle traveling straight, control the neural processor to operate, or to output the result data, at a first frame rate; and in response to the vehicle turning left or right, control the neural processor to operate, or to output the result data, at a second frame rate different from the first frame rate based on the vehicle driving information obtained from the sensor data.

Meanwhile, the first virtual machine among the plurality of virtual machines can be configured to: in response to the vehicle traveling, control the neural processor to operate, or to output the result data, at a first frame rate; and in response to the vehicle stopping, control the neural processor to operate, or to output the result data, at a second frame rate different from the first frame rate based on the vehicle driving information obtained from the sensor data.

Meanwhile, the signal processing device can further include a shared memory, wherein the central processor can be configured to transmit the sensor data to the neural processor by using the shared memory, and the neural processor can be configured to transmit the result data to the central processor by using the shared memory.

Meanwhile, a frame rate of the sensor data written to the shared memory can be a fixed frame rate, and a frame rate of the result data written to the shared memory can be a variable frame rate.

Meanwhile, the first virtual machine can be configured to receive the vehicle driving information detected by the neural processor and to execute an ADAS engine or an autonomous driving engine based on the vehicle driving information.

Meanwhile, a second virtual machine among the plurality of virtual machines can be configured to receive the vehicle driving information from the first virtual machine and to execute an ADAS engine or an autonomous driving engine based on the vehicle driving information.

Meanwhile, a second virtual machine among the plurality of virtual machines can be configured to receive the vehicle driving information from the first virtual machine and to execute an ADAS engine or an autonomous driving engine based on the vehicle driving information, and a third virtual machine among the plurality of virtual machines can be configured to receive the vehicle driving information from the first virtual machine and to execute an augmented reality engine based on the vehicle driving information.

Meanwhile, the second virtual machine can be configured to operate for a first display, and the third virtual machine can be configured to operate for a second display.

Meanwhile, the first virtual machine among the plurality of virtual machines can be configured to control a first neural processor among the at least one neural processor to operate, or to output result data at a variable frame rate based on the sensor data, and configured to control a second neural processor of the at least one neural processor to operate, or to output result data at a variable frame rate based on camera data from a camera device in a vehicle.

Meanwhile, the first virtual machine among the plurality of virtual machines can be configured to control the first neural processor to operate, or to output result data, at a first frame rate during a first period, and control the second neural processor to operate, or to output result data, at a second frame rate during the first period.

In accordance with another aspect of the present disclosure, the above and other objectives can be accomplished by providing a signal processing device including: at least one neural processor; and a central processor configured to execute a hypervisor, wherein the central processor is configured to execute a plurality of virtual machines on the hypervisor, wherein in response to a power saving mode being turned off, a first virtual machine among the plurality of virtual machines is configured to control the neural processor to operate, or to output result data, at a fixed frame rate based on sensor data from a sensor device in a vehicle, and in response to the power saving mode being turned on, control the neural processor to operate, or to output the result data, at a variable frame rate based on vehicle driving information obtained from the sensor data.

Meanwhile, the first virtual machine among the plurality of virtual machines can be configured to: in response to the vehicle moving forward while the power saving mode is turned on, control the neural processor to operate, or to output the result data, at a first frame rate; and in response to the vehicle moving backward while the power saving mode is turned on, control the neural processor to operate, or to output the result data, at a second frame rate different from the first frame rate based on the vehicle driving information obtained from the sensor data.

In accordance with yet another aspect of the present disclosure, the above and other objectives can be accomplished by providing a vehicle display apparatus including: a sensor device; and a signal processing device configured to detect vehicle driving information based on sensor data from the sensor device.

### EFFECTS OF THE DISCLOSURE

A signal processing device according to an embodiment of the present disclosure includes: at least one neural processor; and a central processor configured to execute a hypervisor, wherein the central processor is configured to execute a plurality of virtual machines on the hypervisor, wherein a first virtual machine among the plurality of virtual machines is configured to control the neural processor to operate, or to output result data at a variable frame rate based on sensor data from a sensor device in a vehicle. Accordingly, it is possible to efficiently operate the neural processor. Further, power consumption can be reduced.

Meanwhile, the neural processor can be configured to detect vehicle driving information based on the sensor data, and to operate at the variable frame rate, or to output the result data including the vehicle driving information at the variable frame rate, based on the vehicle driving information. Accordingly, it is possible to efficiently operate the neural processor based on the vehicle driving information.

Meanwhile, the neural processor can be configured to receive the sensor data at a fixed frame rate, to detect vehicle driving information based on the sensor data, and to operate at the variable frame rate, or to output the result data including the vehicle driving information at the variable frame rate, based on the vehicle driving information. Accordingly, it is possible to efficiently operate the neural processor based on the vehicle driving information.

Meanwhile, the first virtual machine among the plurality of virtual machines can be configured to control the neural processor to operate, or to output the result data, at a first frame rate during a first period based on the sensor data, and configured to control the neural processor to operate, or to output the result data, at a second frame rate different from the first frame rate during a second period after the first period based on the vehicle driving information obtained from the sensor data. Accordingly, it is possible to efficiently operate the neural processor.

Meanwhile, the first virtual machine among the plurality of virtual machines can be configured to: in response to a power saving mode being turned off, control the neural processor to operate, or to output the result data, at a fixed frame rate based on the sensor data; and in response to the power saving mode being turned on, control the neural processor to operate, or to output the result data, at a variable frame rate based on the vehicle driving information obtained from the sensor data. Accordingly, it is possible to efficiently operate the neural processor based on the vehicle driving information. Further, power consumption can be reduced.

Meanwhile, the first virtual machine among the plurality of virtual machines can be configured to: in response to the vehicle moving forward, control the neural processor to operate, or to output the result data, at a first frame rate; and in response to the vehicle moving backward, control the neural processor to operate, or to output the result data, at a second frame rate different from the first frame rate based on the vehicle driving information obtained from the sensor data. Accordingly, it is possible to efficiently operate the neural processor based on the vehicle driving information. Further, power consumption can be reduced.

Meanwhile, the first virtual machine among the plurality of virtual machines can be configured to: in response to the vehicle traveling at a first speed, control the neural processor to operate, or to output the result data, at a first frame rate; and in response to the vehicle traveling at a second speed greater than the first speed, control the neural processor to operate, or to output the result data, at a second frame rate different from the first frame rate based on the vehicle driving information obtained from the sensor data. Accordingly, it is possible to efficiently operate the neural processor based on the vehicle driving information. Further, power consumption can be reduced.

Meanwhile, the first virtual machine among the plurality of virtual machines can be configured to: in response to the vehicle traveling straight, control the neural processor to operate, or to output the result data, at a first frame rate; and in response to the vehicle changing lanes while traveling, control the neural processor to operate, or to output the result data, at a second frame rate different from the first frame rate based on the vehicle driving information obtained from the sensor data. Accordingly, it is possible to efficiently operate the neural processor based on the vehicle driving information. Further, power consumption can be reduced.

Meanwhile, the first virtual machine among the plurality of virtual machines can be configured to: in response to the vehicle traveling straight, control the neural processor to operate, or to output the result data, at a first frame rate; and in response to the vehicle turning left or right, control the neural processor to operate, or to output the result data, at a second frame rate different from the first frame rate based on the vehicle driving information obtained from the sensor data. Accordingly, it is possible to efficiently operate the neural processor based on the vehicle driving information. Further, power consumption can be reduced.

Meanwhile, the first virtual machine among the plurality of virtual machines can be configured to: in response to the vehicle traveling, control the neural processor to operate, or to output the result data, at a first frame rate; and in response to the vehicle stopping, control the neural processor to operate, or to output the result data, at a second frame rate different from the first frame rate based on the vehicle driving information obtained from the sensor data. Accordingly, it is possible to efficiently operate the neural processor based on the vehicle driving information. Further, power consumption can be reduced.

Meanwhile, the signal processing device can further include a shared memory, wherein the central processor can be configured to transmit the sensor data to the neural processor by using the shared memory, and the neural processor can be configured to transmit the result data to the central processor by using the shared memory. Accordingly, it is possible to efficiently operate the neural processor. Further, power consumption can be reduced.

Meanwhile, a frame rate of the sensor data written to the shared memory can be a fixed frame rate, and a frame rate of the result data written to the shared memory can be a variable frame rate. Accordingly, it is possible to efficiently operate the neural processor. Further, power consumption can be reduced.

Meanwhile, the first virtual machine can be configured to receive the vehicle driving information detected by the neural processor and to execute an ADAS engine or an autonomous driving engine based on the vehicle driving information. Accordingly, the vehicle driving information based on the sensor data can be used in various ways.

Meanwhile, a second virtual machine among the plurality of virtual machines can be configured to receive the vehicle driving information from the first virtual machine and to execute an ADAS engine or an autonomous driving engine based on the vehicle driving information. Accordingly, the vehicle driving information based on the sensor data can be used in various ways.

Meanwhile, a second virtual machine among the plurality of virtual machines can be configured to receive the vehicle driving information from the first virtual machine and to execute an ADAS engine or an autonomous driving engine based on the vehicle driving information, and a third virtual machine among the plurality of virtual machines can be configured to receive the vehicle driving information from the first virtual machine and to execute an augmented reality engine based on the vehicle driving information. Accordingly, the vehicle driving information based on the sensor data can be used in various ways.

Meanwhile, the second virtual machine can be configured to operate for a first display, and the third virtual machine can be configured to operate for a second display. Accordingly, the plurality of displays can be efficiently controlled by using the virtual machines.

Meanwhile, the first virtual machine among the plurality of virtual machines can be configured to control a first neural processor among the at least one neural processor to operate, or to output result data at a variable frame rate based on the sensor data, and configured to control a second neural processor of the at least one neural processor to operate, or to output result data at a variable frame rate based on camera data from a camera device in a vehicle. Accordingly, it is possible to efficiently operate the neural processors based on the vehicle driving information. Further, power consumption can be reduced.

Meanwhile, the first virtual machine among the plurality of virtual machines can be configured to control the first neural processor to operate, or to output result data, at a first frame rate during a first period, and control the second neural processor to operate, or to output result data, at a second frame rate during the first period. Accordingly, it is possible to efficiently operate the neural processors based on the vehicle driving information. Further, power consumption can be reduced.

A signal processing device according to another embodiment of the present disclosure includes: at least one neural processor; and a central processor configured to execute a hypervisor, wherein the central processor is configured to execute a plurality of virtual machines on the hypervisor, wherein in response to a power saving mode being turned off, a first virtual machine among the plurality of virtual machines is configured to control the neural processor to operate, or to output result data, at a fixed frame rate based on sensor data from a sensor device in a vehicle, and in response to the power saving mode being turned on, control the neural processor to operate, or to output the result data, at a variable frame rate based on vehicle driving information obtained from the sensor data. Accordingly, it is possible to efficiently operate the neural processor based on the vehicle driving information. Further, power consumption can be reduced.

Meanwhile, the first virtual machine among the plurality of virtual machines can be configured to: in response to the vehicle moving forward while the power saving mode is turned on, control the neural processor to operate, or to output the result data, at a first frame rate; and in response to the vehicle moving backward while the power saving mode is turned on, control the neural processor to operate, or to output the result data, at a second frame rate different from the first frame rate based on the vehicle driving information obtained from the sensor data. Accordingly, it is possible to efficiently operate the neural processor based on the vehicle driving information. Further, power consumption can be reduced.

A vehicle display apparatus according to yet another embodiment of the present disclosure includes: a sensor device; and a signal processing device configured to detect vehicle driving information based on sensor data from the sensor device. Accordingly, it is possible to efficiently operate the neural processor based on the vehicle driving information. Further, power consumption can be reduced.

### BRIEF DESCRIPTION OF THE DRAWINGS

FIG. 1 is a view showing an example of the exterior and interior of a vehicle;
FIG. 2 is a view showing the external appearance of a display apparatus for vehicles according to an embodiment of the present disclosure;
FIG. 3 illustrates an example of an internal block diagram of the display apparatus for vehicles of FIG. 2;
FIG. 4 is a view showing a system driven in a signal processing device related to the present disclosure;
FIG. 5 is a diagram illustrating an example of a system executed in a signal processing device according to an embodiment of the present disclosure;
FIG. 6 is a diagram referred to in the description of operation of a system executed in a signal processing device according to the embodiment of the present disclosure;
FIGS. 7A to 9B are diagrams referred to in the description of FIG. 5 or FIG. 6;
FIG. 10A is an exemplary internal block diagram of a signal processing device associated with the present disclosure;
FIG. 10B is a diagram referred to in the description of FIG. 10A;
FIG. 11A is a diagram illustrating an example of a system executed in a signal processing device according to an embodiment of the present disclosure;
FIGS. 11B to 11D are diagrams illustrating various examples of a system executed in a signal processing device according to an embodiment of the present disclosure;
FIG. 12 is an exemplary flowchart illustrating a method of operating a signal processing device according to an embodiment of the present disclosure;
FIGS. 13A and 13B are diagrams illustrating various exemplary flowcharts illustrating a method of operating a signal processing device according to an embodiment of the present disclosure; and
FIGS. 14A to 19 are diagrams referred to in the description of FIGS. 12 to 13B.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

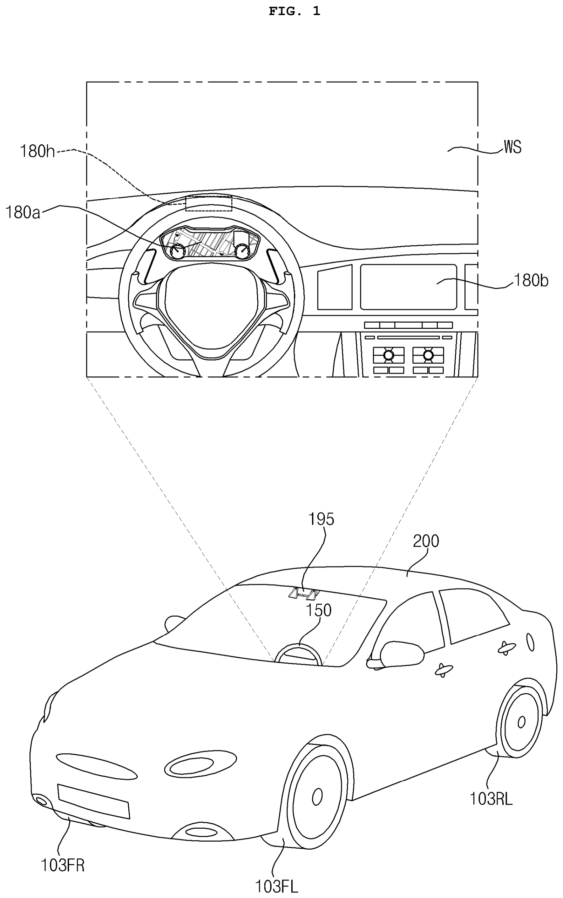

FIG. 1 is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be provided therein with a plurality of displays 180a and 180b configured to display images, information, etc., and an image projection device 180h configured to project an image onto a windshield WS.

In FIG. 1, a cluster display 180a and an audio video navigation (AVN) display 180b are illustrated as the plurality of displays 180a and 180b, and the image projection device 180h is illustrated as the head-up display (HUD).

Meanwhile, the audio video navigation (AVN) display 180b can also be called a center information display.

Meanwhile, the vehicle 200 described in this specification can be a concept including all of a vehicle having an engine as a power source, a hybrid vehicle having an engine and an electric motor as a power source, and an electric vehicle having an electric motor as a power source.

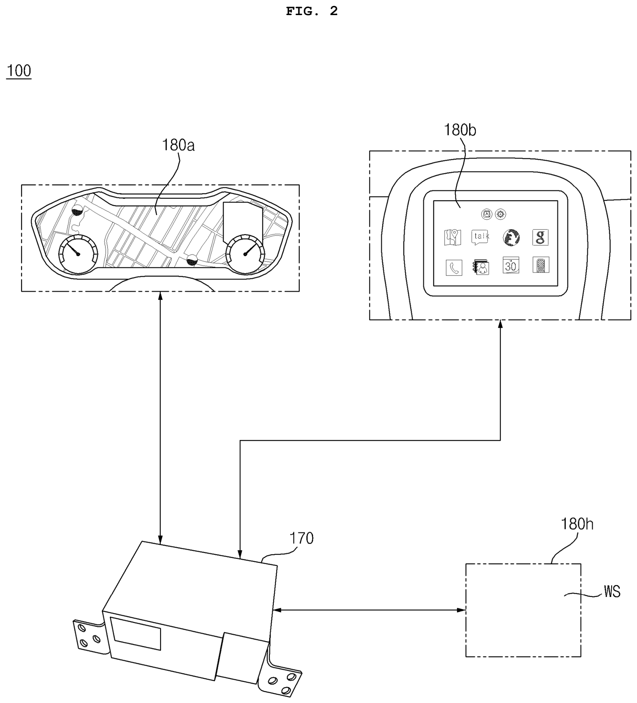

FIG. 2 is a view showing the external appearance of a display apparatus for vehicles according to an embodiment of the present disclosure.

A vehicle display apparatus 100 according to an embodiment of the present disclosure can include a plurality of displays 180a and 180b, an image projection device 180h, and a signal processing device 170 configured to perform signal processing for displaying images, information, and the like on the plurality of displays 180a and 180b and the image projection device 180h.

The first display 180a, which is one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

The image projection device 180h, which is a head-up display (HUD), can include an optical device (not shown) for image projection.

The signal processing device 170 can include a shared memory 508 and a central processor 175, and can execute first to third virtual machines 520 to 540 on a hypervisor 505 in the central processor 175.

The first virtual machine 520, which is a server virtual machine, can be configured to control a second virtual machine 530 and a third virtual machine 50 which are guest virtual machines.

Meanwhile, the second virtual machine can be referred to as a first guest virtual machine, and the third virtual machine can be referred to as a second guest virtual machine.

The first guest virtual machine 530 can operate for the first display 180a, and the second guest virtual machine 540 can operate for the second display 180b.

Meanwhile, the server virtual machine 520 in the processor 715 can be configured to set up the shared memory 508 based on the hypervisor 505 for transmission of identical data to the first guest virtual machine 530 and the second guest virtual machine 540. Accordingly, the first display 180a and the second display 180b in a vehicle can display identical information or identical images in a synchronized manner.

Meanwhile, the server virtual machine 520 in the central processor 175 can be configured to receive and process wheel speed sensor data of the vehicle, and transmit speed information based on the wheel speed sensor data to at least one of the first guest virtual machine 530 or the second guest virtual machine 540. Accordingly, at least one virtual machine and the like can share the vehicle speed information.

Accordingly, it is possible to control various displays 180a and 180b and the image projection device 180h by using the single signal processing device 170.

Meanwhile, some of the plurality of displays 180a to 180b can be operated based on a Linux Operating System (OS), and others can be operated based on a Web Operating System (OS).

The signal processing device 170 according to the embodiment of the present disclosure can be configured to operate displays 180a to 180b under various operating systems also display identical information or identical images in a synchronized state.

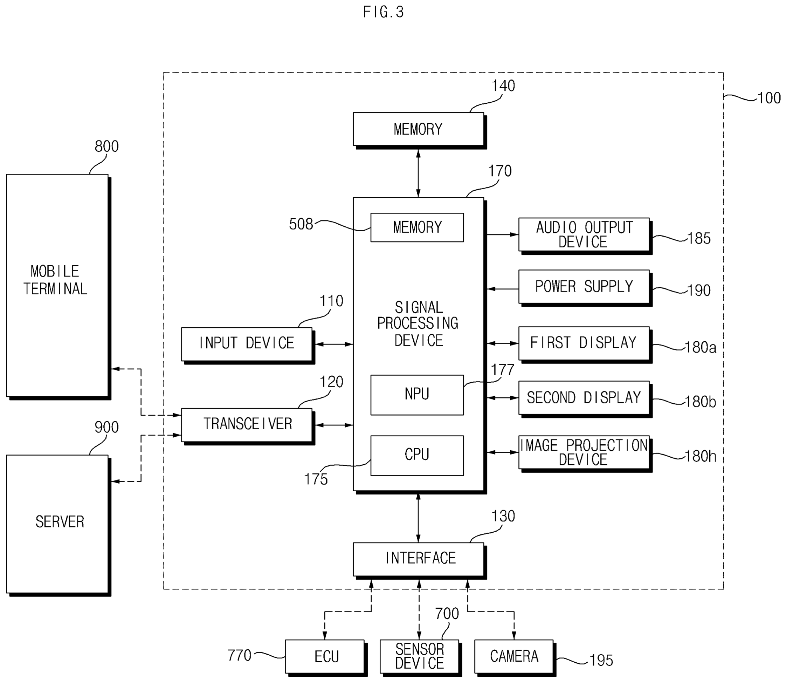

FIG. 3 illustrates an example of an internal block diagram of the display apparatus for vehicles according to the embodiment of the present disclosure.

Referring to FIG. 3, the vehicle display apparatus 100 according to the embodiment of the present disclosure can include an input device 110, a transceiver 120, an interface 130, a memory 140, a signal processing device 170, a plurality of displays 180a to 180b, an image projection device 180h, an audio output device 185, and a power supply 190.

The input device 110 can include a physical button or pad for button input or touch input.

Meanwhile, the input device 110 can include a microphone (not shown) for user voice input.

The transceiver 120 can wirelessly exchange data with a mobile terminal 800 or a server (not shown).

In particular, the transceiver 120 can wirelessly exchange data with a mobile terminal of a vehicle driver. Any of various data communication schemes, such as Bluetooth, Wi-Fi, WIFI Direct, and APIX, can be used as a wireless data communication scheme.

The transceiver 120 can receive weather information and road traffic situation information, such as transport protocol expert group (TPEG) information, from the mobile terminal 800 or the server (not shown). To this end, the transceiver 120 can include a mobile communication module (not shown).

The interface 130 can receive sensor data and the like from an electronic control unit (ECU) 770 or a sensor device 700, and can transmit the received information to the signal processing device 170.

Here, the sensor data can include at least one of vehicle direction data, vehicle location data (global positioning system (GPS) data), vehicle angle data, vehicle velocity data, vehicle acceleration data, vehicle inclination data, vehicle forward/backward movement data, battery data, fuel data, tire data, vehicle lamp data, in-vehicle temperature data, or in-vehicle humidity data.

The sensor data can be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module can include a GPS module configured to receive GPS data.

Meanwhile, the interface 130 can receive front-of-vehicle image data, side-of-vehicle image data, rear-of-vehicle image data, and obstacle-around-vehicle distance information from a camera 195 or lidar (not shown), and can transmit the received information to the signal processing device 170.

The memory 140 can store various data necessary for overall operation of the display apparatus 100 for vehicles, such as programs for processing or control of the signal processing device 170.

For example, the memory 140 can store data about the hypervisor, the server virtual machine 520, and the plurality of guest virtual machines which are to be executed in the central processor 175.

The audio output device 185 can convert an electrical signal from the signal processing device 170 into an audio signal, and can output the audio signal. To this end, the audio output device 185 can include a speaker and the like.

The power supply 190 can supply power necessary to operate components under control of the signal processing device 170. In particular, the power supply 190 can receive power from a battery in the vehicle.

The image projection device 180h includes an optical device (not shown) for image projection and can be controlled by the signal processing device 170 to output an augmented reality-based object.

For example, the image projection device 180h can be configured to output vehicle speed information, vehicle heading direction information, a preceding vehicle object, an indicator of a distance to the preceding vehicle, and the like.

In another example, the image projection device 180h can output an augmented reality lane carpet corresponding to a lane image, an augmented reality route carpet, or an augmented reality dynamic carpet.

The signal processing device 170 can be configured to control the overall operation of each unit in the vehicle display apparatus 100.

For example, the signal processing device 170 can include the shared memory 508, the central processor 175 configured to perform signal processing for the vehicle displays 180a and 180b, and at least one neural processor 177.

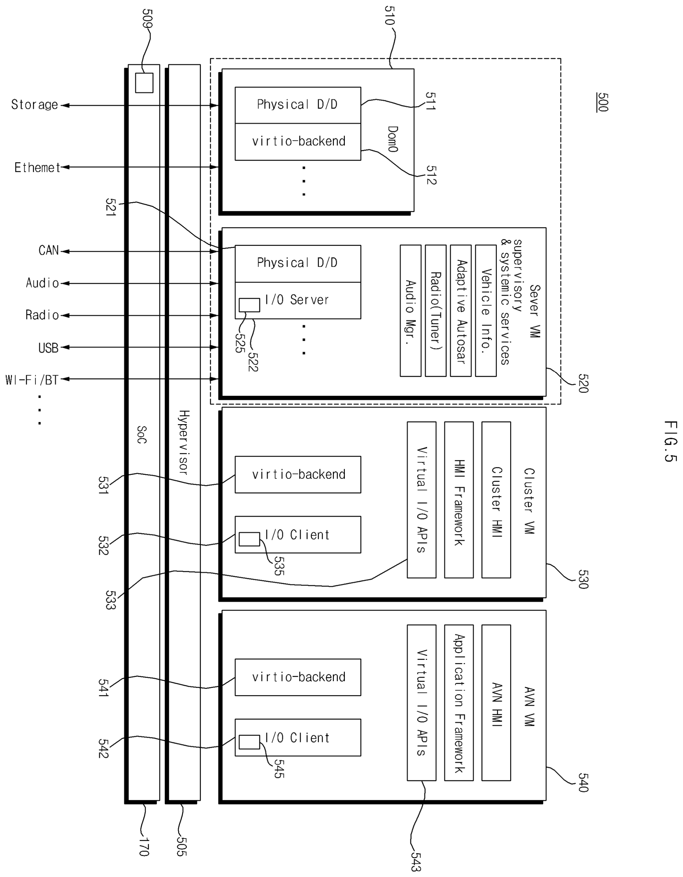

The central processor 175 can be configured to execute the hypervisor 505 (see FIG. 5), and execute the server virtual machine 520 and the plurality of guest virtual machines 530 and 540 on the hypervisor 505 that runs (see FIG. 5).

In this case, the first guest virtual machine 530 can be configured to operate for the first display 180a, and the second guest virtual machine 540 can operate for the second display 180b.

For example, the server virtual machine 520 in the processor 715 can be configured to receive, process, and output vehicle sensor data, position information data, camera data, audio data, or touch input data. Data processing can be efficiently performed by separating data processed only by a legacy virtual machine and data processed by the server virtual machine 520. In particular, the server virtual machine 520 can be configured to process most of the data, thereby allowing 1:N data sharing.

In another example, the server virtual machine 520 can be configured to directly receive and process CAN communication data, audio data, radio data, USB data, and wireless communication data for the first and second guest virtual machines 530 and 540.

Further, the server virtual machine 520 can be configured to transmit the processed data to the first and second guest virtual machines 530 and 540.

Accordingly, among the server virtual machine 520 and the plurality of guest virtual machines 530 and 540, only the server virtual machine 520 can be configured to receive communication data and external input data and perform signal processing, whereby load in signal processing by the other virtual machines can be reduced and 1:N data communication can be achieved, and therefore synchronization at the time of data sharing can be achieved.

Meanwhile, the server virtual machine 520 can be configured to write data in the shared memory 508, whereby the first guest virtual machine 530 and the second guest virtual machine 540 share identical data.

For example, the server virtual machine 520 can be configured to write vehicle sensor data, the position information data, the camera data, or the touch input data in the shared memory 508, whereby the first guest virtual machine 530 and the second guest virtual machine 540 share identical data. Accordingly, 1:N data sharing can be achieved.

As a result, the server virtual machine 520 can process most of the data, thereby allowing 1:N data sharing.

Meanwhile, the server virtual machine 520 in the central processor 175 can be configured to set up the shared memory 508 based on the hypervisor 505 for transmission of identical data to the first guest virtual machine 530 and the second guest virtual machine 540.

That is, the server virtual machine 520 in the central processor 175 can be configured to transmit identical data to the first guest virtual machine 530 and the second guest virtual machine 540 in a synchronized manner by using the shared memory 508 based on the hypervisor 505. Accordingly, the plurality of displays 180a and 180b in the vehicle can display identical images in a synchronized manner.

Meanwhile, the signal processing device 170 can be configured to process various signals, such as an audio signal, an image signal, and a data signal. To this end, the signal processing device 170 can be implemented in the form of a system on chip (SOC).

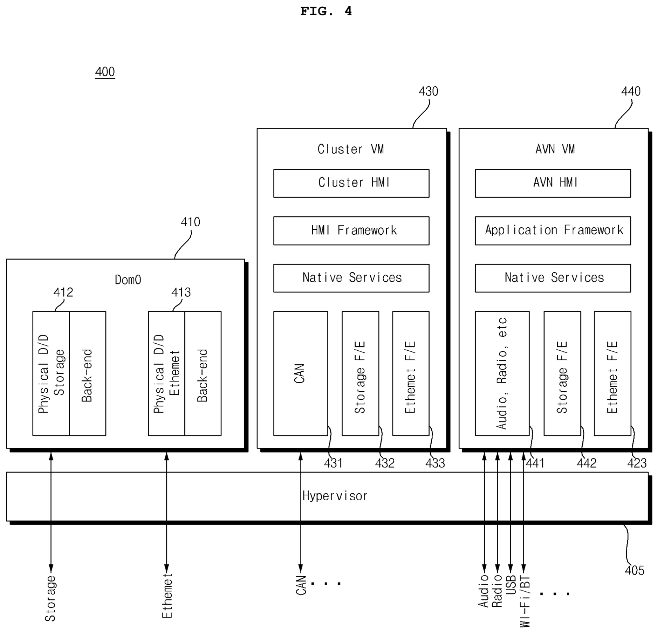

FIG. 4 is a view showing a system driven in a signal processing device related to the present disclosure.

Referring to the figure, FIG. 4 is a view illustrating that virtual machines are used for the cluster display 180a and the AVN display 180b.

The system 400 driven in the signal processing device of FIG. 4 illustrates that a cluster virtual machine 430 and an AVN virtual machine 440 are executed through a hypervisor 405 in the central processor 175.

Meanwhile, the system 400 driven in the signal processing device of FIG. 4 illustrates that a legacy virtual machine 410 is also executed on the hypervisor 405 in the central processor 175.

The legacy virtual machine 410 can include an interface 412 for data communication with the memory 140 and an interface 413 for Ethernet communication.

Meanwhile, the cluster virtual machine 430 can include an interface 431 for CAN communication, an interface 432 for communication with the interface 412 of the legacy virtual machine 410, and an interface 433 for communication with the interface 413 of the legacy virtual machine 410.

Meanwhile, the AVN virtual machine 440 can include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

In the system 400, there is a disadvantage in that CAN communication data are input and output only in the cluster virtual machine 430, whereby the CAN communication data cannot be utilized in the AVN virtual machine 440.

Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

Meanwhile, there is a drawback in that the cluster virtual machine 430 and the AVN virtual machine 440 are required to include the interfaces 431 and 432 and the interfaces 441 and 442, respectively, for memory data and Ethernet communication data input and output in the legacy virtual machine 410.

Therefore, the present disclosure proposes a scheme for improving the system of FIG. 4. That is, unlike FIG. 4, virtual machines are divided into the server virtual machine 520 and the guest virtual machines such that various memory data, communication data, and the like are input and output in the server virtual machine 520, instead of the guest virtual machines, which will be described below with reference to FIG. 5 and subsequent figures.

FIG. 5 is a diagram illustrating an example of a system executed in a signal processing device according to an embodiment of the present disclosure.

Referring to the figure, a system 500 of FIG. 5 is illustrated in which the server virtual machine 520, which is a server virtual machine, and the first guest virtual machine 530 and the second guest virtual machine 540, which are guest virtual machines, are executed on the hypervisor 505 in the central processor 175 of the signal processing device 170.

The first guest virtual machine 530 can be a virtual machine for the cluster display 180a, and the second guest virtual machine 540 can be a virtual machine for the AVN display 180b.

That is, the first guest virtual machine 530 and the second guest virtual machine 540 can be operated for image rendering of the cluster display 180a and the AVN display 180b, respectively.

Meanwhile, it is also illustrated that in the system 500 running on the signal processing device 170 of FIG. 5, a legacy virtual machine 510 is also executed on the hypervisor 505 in the central processor 175.

The legacy virtual machine 510 can include an interface 511 for data communication and Ethernet communication with the memory 140.

Meanwhile, the legacy virtual machine 510 can further include a virtio-backend interface 512 for data communication with the first and second guest virtual machines 530 and 540.

The server virtual machine 520 can include an interface 521 for input and output of audio data, radio data, USB data, and wireless communication data, and an input and output server interface 522 for data communication with the guest virtual machines.

That is, the server virtual machine 520, which is a server virtual machine, can be configured to provide inputs/outputs (I/O) difficult to virtualize with standard virtualization technology (VirtIO) to a plurality of guest virtual machines, e.g., the first and second guest virtual machines 530 and 540.

Meanwhile, the server virtual machine 520, which is a server virtual machine, can be configured to control radio data and audio data at a supervisor level, and provide the data to a plurality of guest virtual machines, e.g., the first and second guest virtual machines 530 and 540, and the like.

Meanwhile, the server virtual machine 520, which is a server virtual machine, can be configured to process vehicle data, sensor data, and surroundings-of-vehicle information, and provide the processed data or information to a plurality of guest virtual machines, e.g., the first and second guest virtual machines 530 and 540, and the like.

Meanwhile, the server virtual machine 520 can be configured to provide supervisory services, such as processing of vehicle data and audio routing management, and the like.

Next, the first guest virtual machine 530 can include an input and output client interface 532 for data communication with the server virtual machine 520 and APIs 533 configured to control the input and output client interface 532.

In addition, the first guest virtual machine 530 can include a virtio-backend interface for data communication with the legacy virtual machine 510.

The first guest virtual machine 530 can be configured to receive memory data by communication with the memory 140 and Ethernet data by Ethernet communication from the virtio-backend interface 512 of the legacy virtual machine 510 through the virtio-backend interface.

Next, the second guest virtual machine 540 can include an input and output client interface 542 for data communication with the server virtual machine 520 and APIs 543 configured to control the input and output client interface 542.

In addition, the second guest virtual machine 540 can include a virtio-backend interface for data communication with the legacy virtual machine 510.

The second guest virtual machine 540 can be configured to receive memory data by communication with the memory 140 and Ethernet data by Ethernet communication from the virtio-backend interface 512 of the legacy virtual machine 510 through the virtio-backend interface.

Meanwhile, unlike FIG. 5, the legacy virtual machine 510 can be provided in the server virtual machine 520.

In the system 500, CAN communication data, such as sensing data, are input and output only in the server virtual machine 520, but can be provided to a plurality of guest virtual machines, e.g., the first and second guest virtual machines 530 and 540, etc., through data processing in the server virtual machine 520. Accordingly, 1:N data communication by processing of the server virtual machine 520 can be achieved.

Also, in the system 500 of FIG. 5, audio data, radio data, USB data, and wireless communication data are input and output only in the server virtual machine 520, but can be provided to a plurality of guest virtual machines, e.g., the first and second guest virtual machines 530 and 540, etc., through data processing in the server virtual machine 520. Accordingly, 1:N data communication by processing of the server virtual machine 520 can be achieved.

Meanwhile, in the system 500 of FIG. 5, the first and second guest virtual machines 530 and 540 can be configured to operate on different operating systems.

For example, the first guest virtual machine 540 can be configured to operate on Linux OS, and the second guest virtual machine 540 can be configured to operate on a Web-based OS.

In the server virtual machine 520, the shared memory 508 based on the hypervisor 505 is set up for data sharing even when the first and second guest virtual machines 530 and 540 operate on different operating systems. Accordingly, even when the first and second guest virtual machines 530 and 540 operate on different operating systems, identical data or identical images can be shared in a synchronized manner. As a result, the plurality of displays 180a and 180b can display identical data or identical images in a synchronized manner.

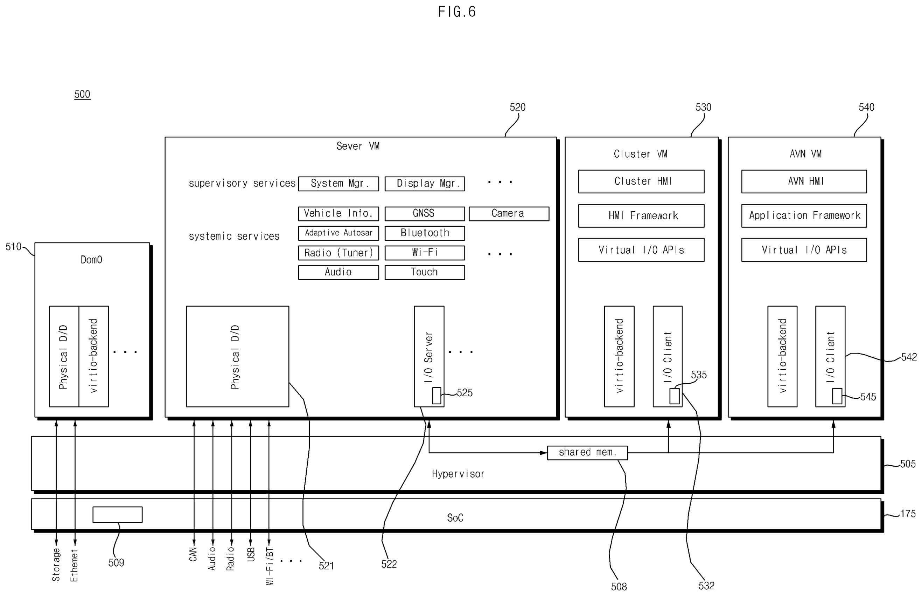

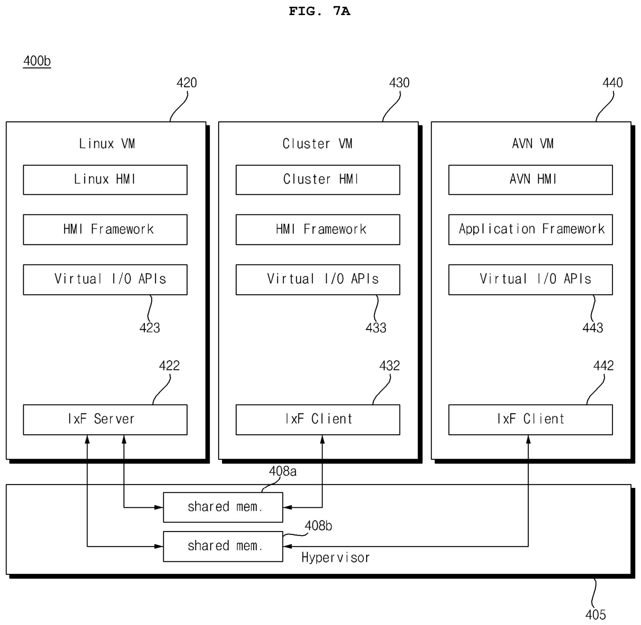

FIG. 6 is a diagram referred to in the description of operation of a system executed in a signal processing device according to the embodiment of the present disclosure, and FIGS. 7A to 9B are diagrams referred to in the description of FIG. 5 or FIG. 6.

First, in the system 500 of FIG. 6, the central processor 175 in the signal processing device 170 executes the server virtual machine 520 and the plurality of guest virtual machines 530 and 540 on the hypervisor 505 in the central processor 175, and the server virtual machine 520 in the central processor 175 can be configured to set up the shared memory 508 based on the hypervisor 505 for data transmission to the first and second guest virtual machines 530 and 540.

For example, as an example of identical data, identical image data can be transmitted from the server virtual machine 520 to the first guest virtual machine 530 and the second guest virtual machine 540. Accordingly, the plurality of displays 180a and 180b in the vehicle can display identical images in a synchronized manner.

Meanwhile, in the system 500 of FIG. 6, the central processor 175 in the signal processing device 170 executes the server virtual machine 520 and the plurality of guest virtual machines 530 and 540 on the hypervisor 505 in the central processor 175, and the server virtual machine 520 in the central processor 175 can be configured to transmit identical data to the first and second guest virtual machines 530 and 540 in a synchronized manner by using the shared memory 508 based on the hypervisor 505.

For example, examples of identical data can include CAN communication data, audio data, radio data, USB data, wireless communication data, position information data, or touch data, and the like. Accordingly, the plurality of displays 180a and 180b in the vehicle can display identical data in a synchronized manner.

Meanwhile, the server virtual machine 520 in the central processor 175 can be configured to receive and process position information data that changes according to movement, and provide the processed data to the first guest virtual machine 530 or the second guest virtual machine 540. Accordingly, instead of 1:1 data communication, 1:N data communication between the virtual machines can be achieved by using the shared memory.

Meanwhile, the first guest virtual machine 530 and the second guest virtual machine 540 can be driven by different operating systems. Accordingly, even when the plurality of virtual machines are driven by different operating systems, high-speed data communication can be performed.

Meanwhile, although not illustrated in FIG. 6, the legacy virtual machine 510 can be configured to transmit memory data from the memory 140 and Ethernet data by Ethernet communication to the first guest virtual machine 530 and the second guest virtual machines 540 in a synchronized manner by using the shared memory 508 based on the hypervisor 505. That is, 1:N data communication of the memory data or the Ethernet data can be performed. Accordingly, identical data can be transmitted in a synchronized manner.

Meanwhile, the server virtual machine 520 in the central processor 175 can be configured to execute supervisory services, such as a system manager, a display manager, and the like.

Meanwhile, the server virtual machine 520 in the central processor 175 can be configured to execute systemic services, such as vehicle information service, position information service, camera service, AUTOSAR, Bluetooth communication service, radio service, Wi-Fi service, audio service, touch service, and the like.

FIG. 7A is a diagram illustrating an example of three virtual machines 420, 420, and 430 operating on a system 400b of FIG. 4.

Referring to the figure, the server virtual machine 420 and 420 is a Linux-based virtual machine, and can include an input and output server interface 422 for data transmission, and the first guest virtual machine 430 and the second guest virtual machine 440 can include input and output client interfaces 432 and 452 for data communication with the input and output server interface 422.

For example, the server virtual machine 420 is required to set up a first shared memory 408a in a hypervisor 405 in order to transmit first data to the first guest virtual machine 430, and to set up a separate second shared memory 408b, different from the first shared memory 408a, in the hypervisor 405 in order to transmit the same first data to the second guest virtual machine 440.

If a separate shared memory is used for transmitting the same first data as illustrated in FIG. 7A, there is a drawback in that resources are wasted and synchronization is not easy.

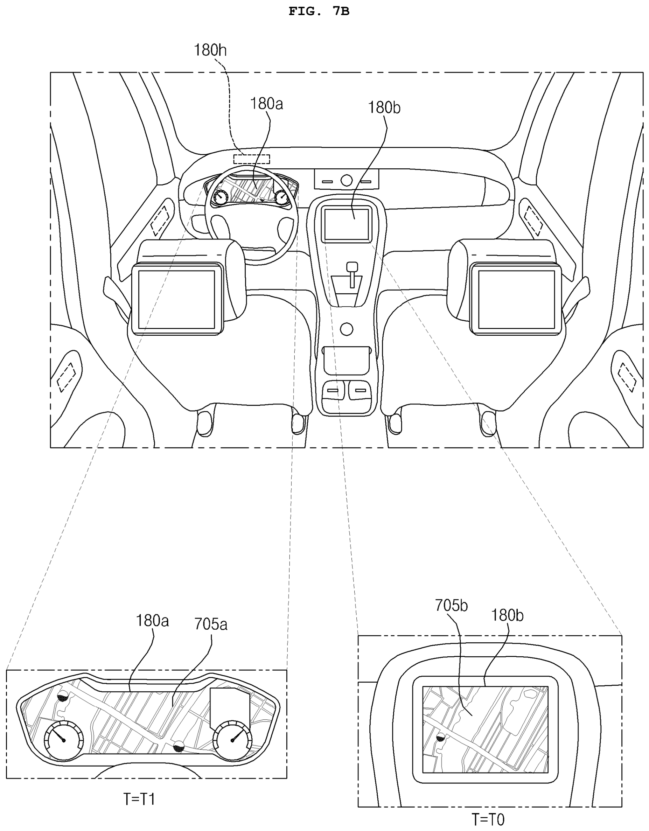

FIG. 7B illustrates an example in which, by the system 400b of FIG. 7A, the first guest virtual machine 430 displays image data received through the first shared memory 408a on the first display 180a, and the second guest virtual machine 440 displays image data received through the second shared memory 408b on the second display 180b.

FIG. 7B illustrates that an image 705a displayed on the first display 180a and an image 705b displayed on the second display 180b are not synchronized with each other and that the image 705b displayed on the second display 180b corresponds to a more previous frame than the image 705a displayed on the first display 180a.

As described above, if the first virtual machine 420 transmits identical image data based on the separate shared memory as illustrated in FIG. 7A, there is a drawback in that images cannot be displayed in a synchronized manner as illustrated in FIG. 7B.

In order to solve this problem, the present disclosure proposes a scheme for allocating a single shared memory at the time of transmission of identical data. Consequently, 1:N data communication is performed, whereby synchronized data transmission is achieved.

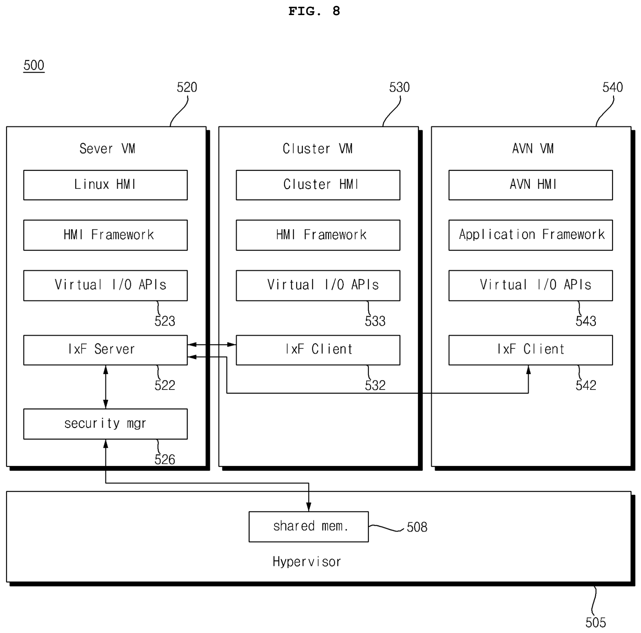

FIG. 8 is a diagram illustrating an example in which the server virtual machine 520 and the plurality of guest virtual machines 530 and 540 are executed on the hypervisor 505 in the central processor 175 of the system 500, and the server virtual machine 520 in the central processor 175 can be configured to set up the shared memory 508 based on the hypervisor 505 for transmission of identical data to the first guest virtual machine 530 and the second guest virtual machine 540.

Accordingly, the plurality of displays 180a and 180b in the vehicle can display identical images in a synchronized manner.

Meanwhile, high-speed data communication can be performed among the plurality of virtual machines 520, 530, and 540. Further, high-speed data communication can be performed even when the plurality of virtual machines 520, 530, and 540 are driven by different operating systems.

Meanwhile, the server virtual machine 520 in the central processor 175 can be configured to transmit data, processed by the server virtual machine 520, to another virtual machine by using a single shared memory 508 instead of allocating memories, the number of which corresponds to the number of virtual machines. Accordingly, instead of 1:1 data communication, 1:N data communication between the virtual machines can be achieved by using the shared memory 508.

Meanwhile, the server virtual machine 520 in the central processor 175 can include the input and output server interface 522 and a security manager 526.

Meanwhile, the first guest virtual machine 530 and the second guest virtual machine 540 can include input and output client interfaces 532 and 542, respectively. Accordingly, high-speed data communication between the plurality of virtual machines can be performed by using the input and output server interface 522 and the input and output client interfaces 532 and 542.

The input and output server interface 522 in the first virtual machine 520 can be configured to receive requests for transmission of identical data from the respective input and output client interfaces 532 and 542 in the first guest virtual machine 530 and the second guest virtual machine 540, and transmit shared data to the shared memory 508 through the security manager 526 based thereon.

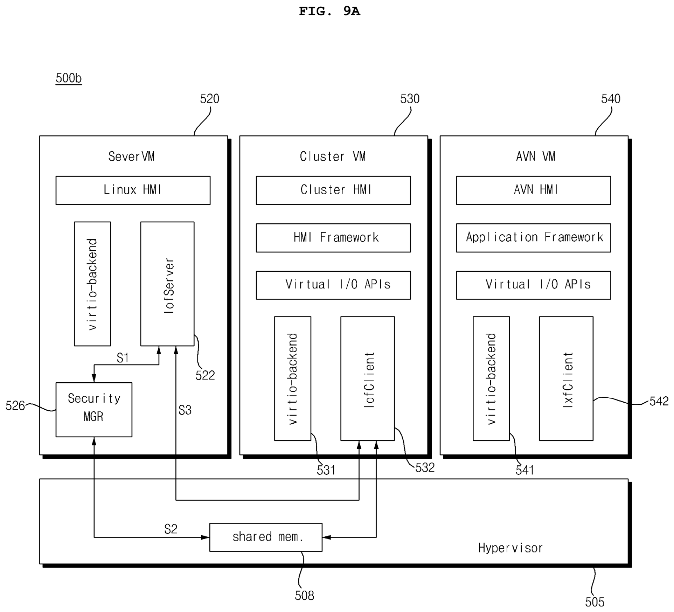

FIG. 9A is a diagram illustrating in further detail transmission of shared data.

Referring to the figure, in order to transmit shared data, the input and output server interface 522 in the server virtual machine 520 transmits a request for allocation of the shared memory 508 to the security manager 526 (S1).

Subsequently, the security manager 526 can be configured to allocate the shared memory 508 using the hypervisor 505 (S2), and write shared data in the shared memory 508.

Meanwhile, the input and output client interfaces 532 and 542 can be configured to transmit a request for connection to the input and output server interface 522 after allocation of the shared memory 508 (S3).

Meanwhile, after allocation of the shared memory 508, the input and output server interface 522 is configured to transmit information regarding the shared memory 508 including key data to the input and output client interfaces 532 and 542 (S4). In this case, the key data can be data for data access.

That is, after setting up the shared memory 508, the server virtual machine 520 in the central processor 175 can be configured to transmit information regarding the shared memory 508 to the first guest virtual machine 530 and the second guest virtual machine 540.

The input and output client interfaces 532 and 542 can be configured to access the shared memory 508 based on the received key data (S5), and copy the shared data from the shared memory 508.

Accordingly, the first guest virtual machine 530 and the second guest virtual machine 540 can be configured to access the shared memory 508, and thus, share the shared data.

For example, in the case in which the shared data are image data, the first guest virtual machine 530 and the second guest virtual machine 540 can be configured to share the image data, and thus, the plurality of displays 180a and 180b in the vehicle can display the same shared image in a synchronized manner.

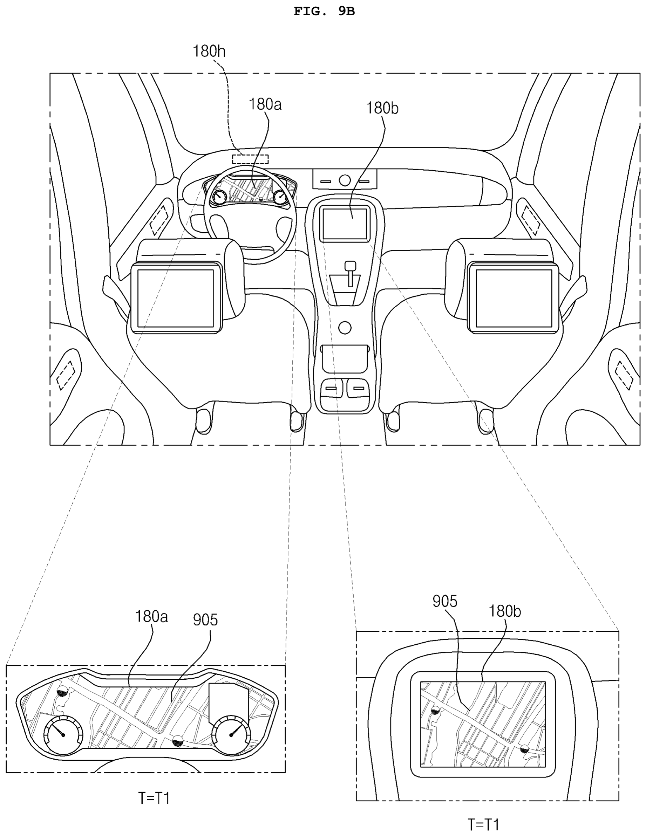

FIG. 9B illustrates an example in which, by the system 500 of FIG. 9A, the first guest virtual machine 530 displays image data received through the shared memory 508 on the first display 180a, and the second guest virtual machine 540 displays image data received through the shared memory 508 on the second display 180b.

FIG. 9B illustrates that an image 905 displayed on the first display 180a and an image 905 displayed on the second display 180b are synchronized, such that the same image can be displayed.

That is, image data processed by the server virtual machine 520 in the central processor 175 are transmitted to the first guest virtual machine 530 and the second guest virtual machine 540 through the shared memory 508, and based on the image data, a first image 905 displayed on the first display 180a and a second image 905 displayed on the second display 180b can be identical to each other. Accordingly, the plurality of displays 180a and 180b in the vehicle can display the same images in a synchronized manner. Further, high-speed data communication among the plurality of virtual machines 520, 530, and 540 can be performed.

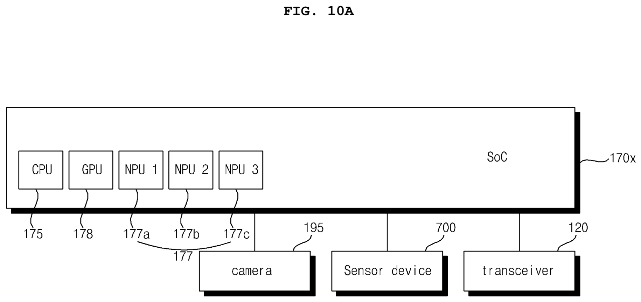

FIG. 10A is an exemplary internal block diagram of a signal processing device associated with the present disclosure.

Referring to FIG. 10A, a signal processing device 170x associated with the present disclosure can include a central processor 175, a graphic processor 178, and a plurality of neural processors 177a to 177c.

The signal processing device 170x associated with the present disclosure can be configured to receive data from a camera device 195, a sensor device 700, a transceiver 120, or a lidar device (not shown), and perform signal processing on the data by using at least one of the central processor 175, the graphic processor 178, or the plurality of neural processors 177a to 177c.

Meanwhile, the sensor device 700 can be configured to continuously output sensor data to the signal processing device 170x during vehicle operation.

In this case, the sensor data can include data from various vehicle sensor devices 700.

Meanwhile, the camera data 195 can be configured to continuously output camera data to the signal processing device 170x during vehicle operation.

Meanwhile, the lidar device (not shown) can be configured to continuously output lidar data to the signal processing device 170x during vehicle operation.

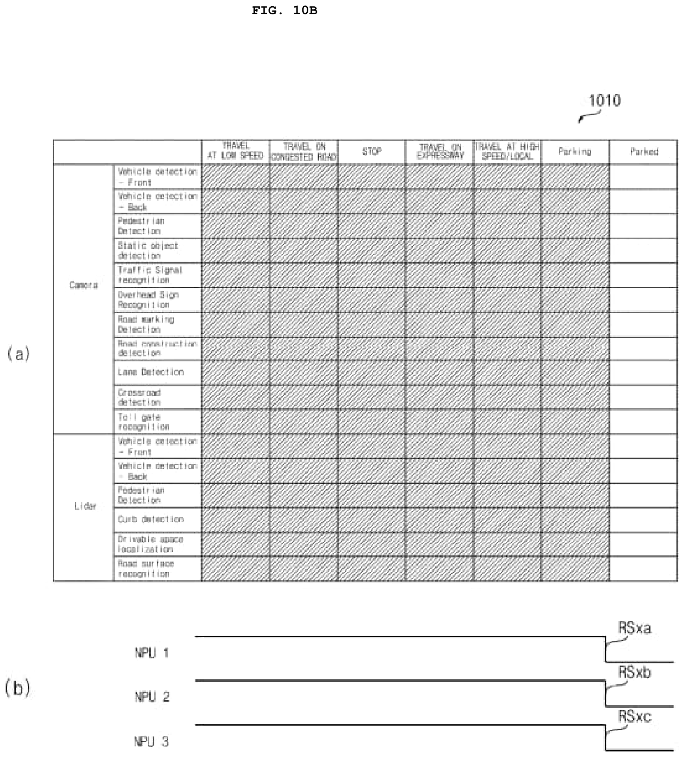

FIG. 10B is a diagram referred to in the description of FIG. 10A.

Referring to FIG. 10B, the signal processing device 170x of FIG. 10A can be configured to continuously receive the data from the camera data 195, the sensor device 700, the transceiver 120, or the lidar device (not shown), and perform various signal processing operations based on the received data.

In FIG. 10B, (a) illustrates an example in which the signal processing device 170x of FIG. 10A receives the camera data from the camera device 195 and performs front vehicle detection, back vehicle detection, pedestrian detection, static object detection, traffic signal detection, overhead sign recognition, road marking detection, road construction detection, lane detection, crossroad detection, toll gate recognition, and the like based on the received camera data.

Meanwhile, (a) of FIG. 10B illustrates an example in which the signal processing device 170x of FIG. 10A receives the lidar data from the lidar device (not shown) and performs front vehicle detection, back vehicle detection, pedestrian detection, curve detection, drivable space localization, road surface recognition, and the like based on the received lidar data.

Meanwhile, in the drawing, it is illustrated that the plurality of neural processors 177a to 177c in the signal processing device 170x of FIG. 10A perform the above various detection or recognition operations based on the camera data or the lidar data, and particularly, regardless of vehicle driving state, continuously perform the above various detection or recognition operations.

That is, in the drawing, it is illustrated that the plurality of neural processors 177a to 177c in the signal processing device 170x of FIG. 10A perform the above various detection or recognition operations based on the camera data or the lidar data, regardless of whether the vehicle travels at a low speed or on a congested road or stops, or whether the vehicle travels on an expressway or travels at a high speed or is in the process of parking.

Meanwhile, in the case in which the plurality of neural processors 177a to 177c in the signal processing device 170x of FIG. 10A operate at a fixed frame rate regardless of vehicle driving state such as a vehicle speed and the like, there is a drawback in that significant processing loads RSxa, RSxb, and RSxc are imposed on the plurality of neural processors 177a to 177c, as illustrated in (b) of FIG. 10B. Further, the processing loads RSxa, RSxb, and RSxc on the plurality of neural processors 177a to 177c result in significant power consumption.

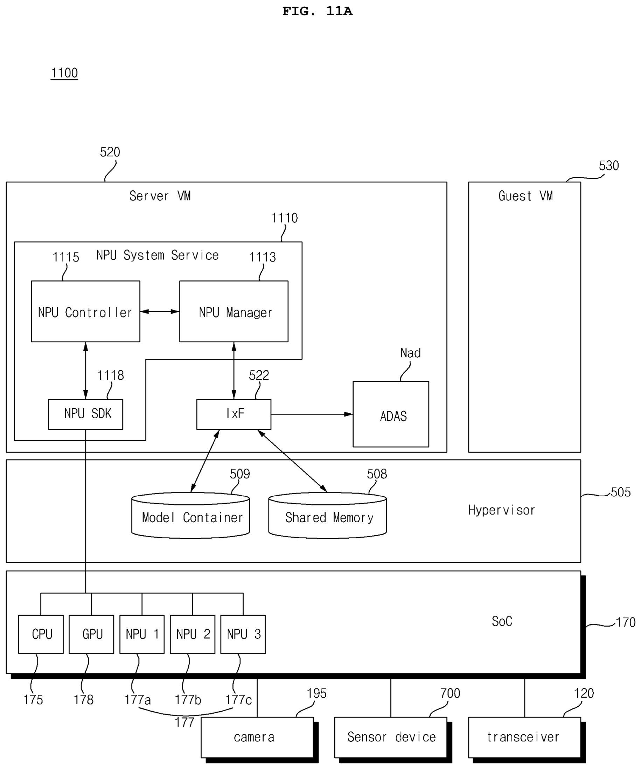

Accordingly, the present disclosure proposes a method of efficiently operating the neural processors, which will be described below with reference to FIG. 11A and subsequent figures.

FIG. 11A is a diagram illustrating an example of a system executed in a signal processing device according to an embodiment of the present disclosure.

Referring to FIG. 11A, a signal processing device 170 according to an embodiment of the present disclosure can include a central processor 175 and at least one neural processor 177a to 177c.

Meanwhile, the signal processing device 170 according to an embodiment of the present disclosure can further include a graphic processor 178.

Meanwhile, the system 1100 executed in the signal processing device 170 according to an embodiment of the present disclosure executes a plurality of virtual machines 520 and 530 on a hypervisor 505.

Specifically, the central processor 175 in the signal processing device 170 according to an embodiment of the present disclosure executes the hypervisor 505, and executes the plurality of virtual machines 520 and 530 on the hypervisor 505.

A first virtual machine 520 among the plurality of virtual machines 520 to 540 controls the operation of the neural processor 177.

The signal processing device 170 according to an embodiment of the present disclosure can be configured to receive data from the camera device 195, the sensor device 700, the transceiver 120, or the lidar device (not shown), and perform signal processing on the data by using at least one of the central processor 175, the graphic processor 178, or the plurality of neural processors 177a to 177c.

Meanwhile, the sensor device 700 can be configured to continuously output sensor data to the signal processing device 170 during vehicle operation.

In this case, the sensor data can be data from various vehicle sensor devices 700, and can include at least one of vehicle direction data, vehicle location data (global positioning system (GPS) data), vehicle angle data, vehicle velocity data, vehicle acceleration data, vehicle inclination data, vehicle forward/backward movement data, battery data, fuel data, tire data, vehicle lamp data, in-vehicle temperature data, and in-vehicle humidity data.

Meanwhile, the camera data 195 can be configured to continuously output camera data to the signal processing device 170 during vehicle operation.

Meanwhile, the lidar device (not shown) can be configured to continuously output lidar data to the signal processing device 170 during vehicle operation.

The first virtual machine 520 among the plurality of virtual machines 520 to 540 can be configured to control the neural processor 177 to operate, or to output result data at a variable frame rate based on the sensor data from the vehicle internal sensor device 700. Accordingly, it is possible to efficiently operate the neural processor 177. In addition, power consumption can be reduced.

Meanwhile, the neural processor 177 can be configured to detect vehicle driving information based on the sensor data, and operate at the variable frame rate, or output result data including the vehicle driving information at the variable frame rate, based on the vehicle driving information. Accordingly, it is possible to efficiently operate the neural processor 177 based on the vehicle driving information.

Meanwhile, the neural processor 177 can be configured to can receive sensor data at a fixed frame rate, detect the vehicle driving information based on the sensor data, and operate at the variable frame rate, or output result data including the vehicle driving information at the variable frame rate, based on the vehicle driving information. Accordingly, it is possible to efficiently operate the neural processor 177 based on the vehicle driving information.

Meanwhile, the signal processing device 170 according to an embodiment of the present disclosure can further include a shared memory 508.

In the drawing, it is illustrated that the central processor 175 executes the hypervisor 505, and a model container 509 and the shared memory 508 are executed in the hypervisor 505.

The model container 509 can be configured to manage a model parameter interface related to operation of the neural processor 177, and versions of learning files.

Meanwhile, unlike the drawing, the shared memory 508 can be located in the signal processing device 170.

The central processor 175 can be configured to transmit the sensor data to the neural processor 177 by using the shared memory 508, and the neural processor 177 can be configured to transmit the result data to the central processor 175 by using the shared memory 508. Accordingly, it is possible to efficiently operate the neural processor 177. In addition, power consumption can be reduced.

A frame rate of the sensor data written to the shared memory 508 can be a fixed frame rate, and a frame rate of the result data written to the shared memory 508 can be a variable frame rate. Accordingly, it is possible to efficiently operate the neural processor 177. In addition, power consumption can be reduced.

Meanwhile, the first virtual machine 520 can be configured to receive vehicle driving information detected by the neural processor 177, and execute an ADAS engine Nad or an autonomous driving engine based on the vehicle driving information. Accordingly, the vehicle driving information based on the sensor data can be used in various ways.

Meanwhile, the first virtual machine 520 can be configured to execute a neural system service 1110 for controlling at least one neural processors 177a to 177c.

The neural system service 1110 can be configured to execute or include a neural manager 1113 for managing at least one neural processor 177a to 177c, a neural controller 1115 for controlling or determining an inference scheme of at least one neural processor 177a to 177c, and a neural interface 1118 for interfacing with at least one neural processor 177a to 177c.

The neural manager 1113 can be configured to perform artificial intelligence (AI) model management, learning model management, camera data management, sensor data management, or command queue management.

The neural controller 1115 can be configured to determine an optimal inference scheme of at least one neural processor 177a to 177c, or perform queuing, partitioning, caching, or scalable coding, or control at least one neural processor 177a to 177c.

The neural interface 1118 can be configured to execute an application program interface (API) associated with an accelerator of at least one neural processor 177a to 177c.

Meanwhile, the interface 522 in the first virtual machine 520 can perform interfacing between the neural system service 1110 and the model container 509 or between the neural system service 1110 and the shared memory 508.

Further, the interface 522 in the first virtual machine 520 can be configured to perform interfacing for the ADAS engine Nad or the autonomous driving engine executed in the first virtual machine 520, and for the neural system service 1110.

Meanwhile, the interface 522 in the first virtual machine 520 can be configured to perform interfacing for another virtual machine 530.

For example, the interface 522 in the first virtual machine 520 can be configured to control the sensor data to be transmitted to the neural processor 177 by using the shared memory 508.

Meanwhile, the interface 522 in the first virtual machine 520 can be configured to transmit result data, output from the neural processor 177 and written to the shared memory 508, to the neural system service 1110.

Meanwhile, the interface 522 in the first virtual machine 520 can be configured to transmit the result data, output from the neural processor 177 and written to the shared memory 508, to the ADAS engine Nad or the autonomous driving engine executed in the first virtual machine 520.

Meanwhile, the interface 522 in the first virtual machine 520 can be configured to transmit the result data, output from the neural processor 177 and written to the shared memory 508, to the second virtual machine 530 and the like.

Meanwhile, the first virtual machine 520 of FIG. 11A can be a server virtual machine, and the second virtual machine 530 can be a guest virtual machine.

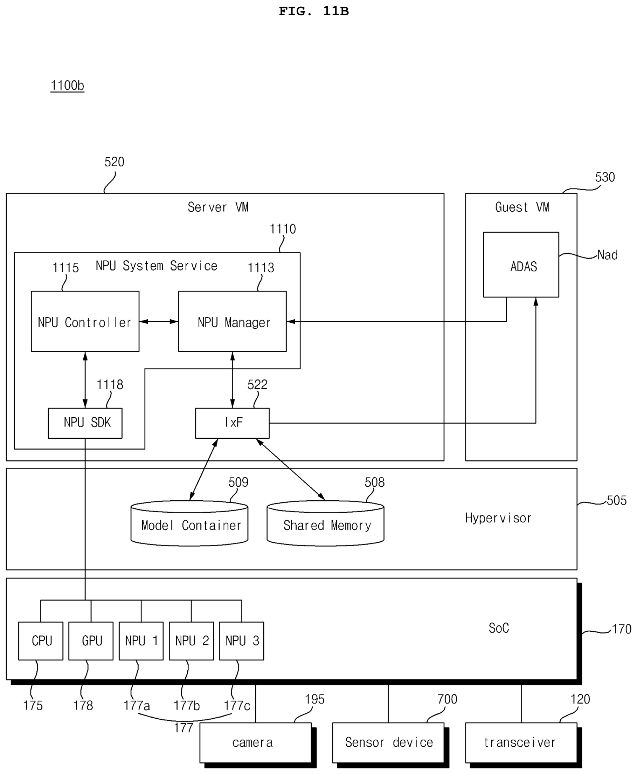

FIGS. 11B to 11D are diagrams illustrating various examples of a system executed in a signal processing device according to an embodiment of the present disclosure.

FIG. 11B is a diagram illustrating another example of a system executed in a signal processing device according to an embodiment of the present disclosure.

Referring to FIG. 11B, a system 1100b executed in the signal processing device 170 according to an embodiment of the present disclosure is similar to the system 1100 of FIG. 11A, but is different in that the ADAS engine Nad or the autonomous driving engine is executed in the second virtual machine 530, rather than in the first virtual machine 520.

That is, the second virtual machine 530 among the plurality of virtual machines 520 to 540 can be configured to receive result data, including vehicle driving information, from the first virtual machine 520 via the shared memory 508, and execute the ADAS engine Nad or the autonomous driving engine based on the vehicle driving information. Accordingly, the vehicle driving information based on the sensor data can be used in various ways.

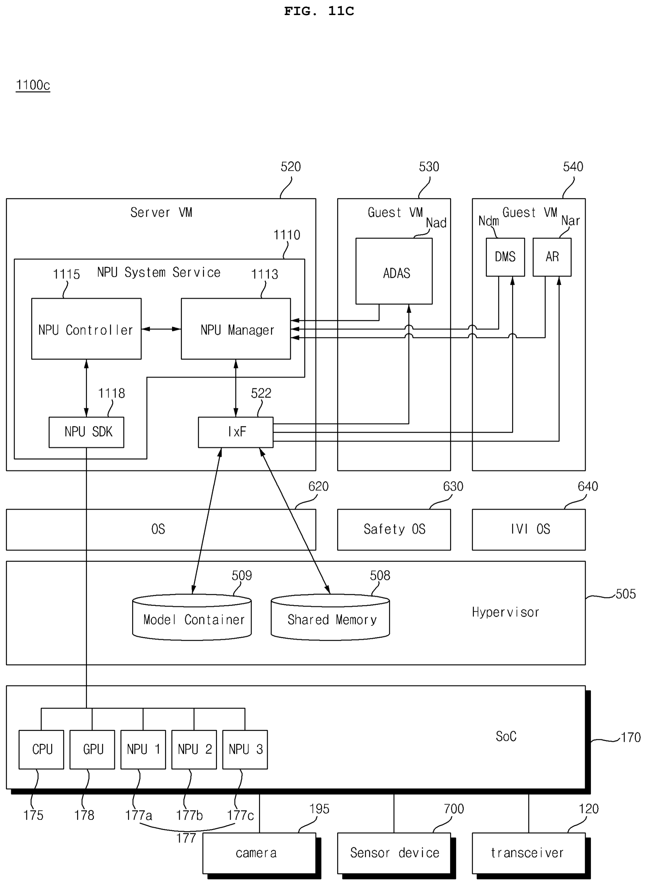

FIG. 11C is a diagram illustrating yet another example of a system executed in a signal processing device according to an embodiment of the present disclosure.

Referring to FIG. 11C, a system 1100c executed in the signal processing device 170 according to an embodiment of the present disclosure is similar to the system 1100 of FIG. 11A, but is different in that the first virtual machine 520, the second virtual machine 530, and the third virtual machine 540 are executed, and the ADAS engine Nad or the autonomous driving engine is executed in the second virtual machine 530, and an augmented reality (AR) engine Nar or a driver monitoring engine Ndm is executed in the third virtual machine 540.

That is, the second virtual machine 530 among the plurality of virtual machines 520 to 540 can be configured to receive result data, including vehicle driving information, from the first virtual machine 520 via the shared memory 508, and execute the ADAS engine Nad or the autonomous driving engine based on the vehicle driving information.

Meanwhile, the third virtual machine 540 among the plurality of virtual machines 520 to 540 can be configured to receive result data, including vehicle driving information, from the first virtual machine 520 via the shared memory 508, and execute the AR engine based on the vehicle driving information. Accordingly, the vehicle driving information based on the sensor data can be used in various ways.

Meanwhile, as illustrated herein, the first virtual machine 520, the second virtual machine 530, and the third virtual machine 540 can have different operating systems (OS).

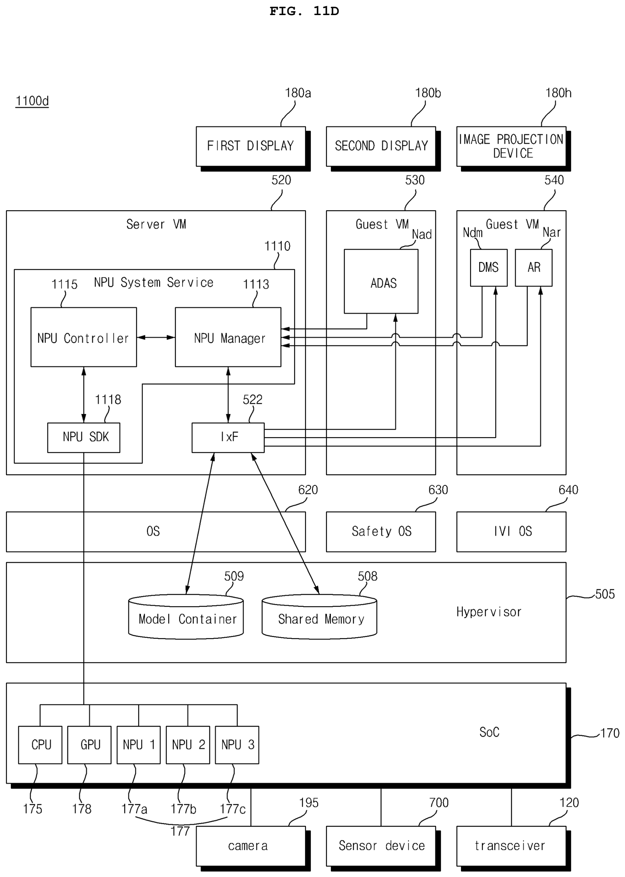

FIG. 11D is a diagram illustrating yet another example of a system executed in a signal processing device according to an embodiment of the present disclosure.

Referring to FIG. 11D, in a system 1100d executed in the signal processing device 170 according to an embodiment of the present disclosure, the first virtual machine 520, the second virtual machine 530, and the third virtual machine 540 are executed, similarly to the system 1100c of FIG. 11C.

The second virtual machine 530 can be configured to execute the ADAS engine Nad or the autonomous driving engine based on vehicle driving information, and the third virtual machine 540 can be configured to execute the AR engine Nar or the driver monitoring engine Ndm based on the vehicle driving information.

Meanwhile, the second virtual machine 530 can be configured to operate for the first display 180a, and the third virtual machine 540 can be configured to operate for the second display 180b. Accordingly, the plurality of displays can be efficiently controlled by using the virtual machines.

Meanwhile, the third virtual machine 540 can be configured to also operate for the image projection device 180h, in addition to the second display 180b. Accordingly, the image projection device can be efficiently controlled by using the virtual machines.

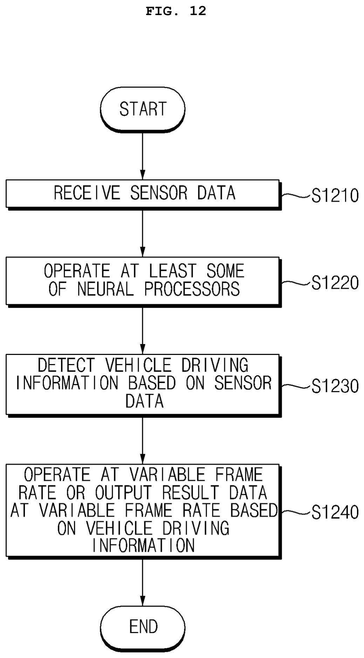

FIG. 12 is an exemplary flowchart illustrating a method of operating a signal processing device according to an embodiment of the present disclosure.

Referring to FIG. 12, the signal processing device 170 according to an embodiment of the present disclosure receives sensor data from the sensor device 700 (S1210).

For example, the central processor 175 in the signal processing device 170 according to an embodiment of the present disclosure can be configured to write the sensor data to the shared memory 508.

Meanwhile, the central processor 175 in the signal processing device 170 according to an embodiment of the present disclosure can be configured to operate at least some of the neural processors 177a to 177c for processing the sensor data (S1220).

For example, the central processor 175 in the signal processing device 170 can be configured to control a first neural processor 177c among the plurality of neural processors 177a to 177c to operate for processing the sensor data.

Then, the neural processor 177 can be configured to detect vehicle driving information based on the received sensor data (S1230).

For example, the first neural processor 177c can be configured to detect vehicle driving information, including vehicle speed information or vehicle stop information, from the wheel speed sensor data written to the shared memory 508.

In another example, the first neural processor 177c can be configured to detect vehicle driving information, including vehicle forward or backward movement information, from vehicle forward or backward movement data written to the shared memory 508.

In yet another example, the first neural processor 177c can be configured to detect vehicle driving information, including lane change information, or information on the left-turn or right-turn of the vehicle, etc., from the vehicle direction data, the vehicle angle data, or the vehicle inclination data written to the shared memory 508.

Meanwhile, the vehicle driving information detected by the neural processor 177 can be transmitted to the first virtual machine 520 in the central processor 175 via the shared memory 508.

Meanwhile, the first virtual machine 520 in the central processor 175 can be configured to control the neural processor 177 in operation to operate at a variable frame rate or to output result data at the variable frame rate, based on the vehicle driving information (S1240).

Accordingly, it is possible to efficiently operate the neural processor 177 based on the vehicle driving information. Further, power consumed by the neural processor 177 can be reduced.

For example, the first virtual machine 520 among the plurality of virtual machines 520 to 540 can be configured to control the neural processor 177 to operate at a first frame rate when a vehicle 200 moves forward, and can be configured to control the neural processor 177 to operate at a second frame rate, less than the first frame rate, when the vehicle 200 moves backward. Accordingly, it is possible to efficiently operate the neural processor 177 based on the vehicle driving information when the vehicle 200 moves backward. Further, power consumed by the neural processor 177 can be reduced.

In another example, the first virtual machine 520 among the plurality of virtual machines 520 to 540 can be configured to control the neural processor 177 to operate at a first frame rate when a vehicle 200 travels at a first speed, and control the neural processor 177 to operate at a third frame rate, greater than the first frame rate, when the vehicle 200 travels at a second speed greater than the first speed. Accordingly, it is possible to efficiently operate the neural processor 177 based on the speed of the vehicle 200.

In yet another example, the first virtual machine 520 among the plurality of virtual machines 520 to 540 can be configured to control the neural processor 177 to operate at a first frame rate when the vehicle 200 travels straight, and control the neural processor 177 to operate at a third frame rate, greater than the first frame rate, when the vehicle 200 changes lanes or turns left or right. Accordingly, when the vehicle 200 changes lanes, it is possible to efficiently operate the neural processor 177 based on the vehicle driving information.

In yet another example, the first virtual machine 520 among the plurality of virtual machines 520 to 540 can be configured to control the neural processor 177 to operate at a first frame rate when the vehicle 200 travels, and control the neural processor 177 to operate at a second frame rate, less than the first frame rate, when the vehicle 200 stops. Accordingly, when the vehicle 200 stops, it is possible to efficiently operate the neural processor 177 based on the vehicle driving information. Further, power consumed by the neural processor 177 can be reduced.

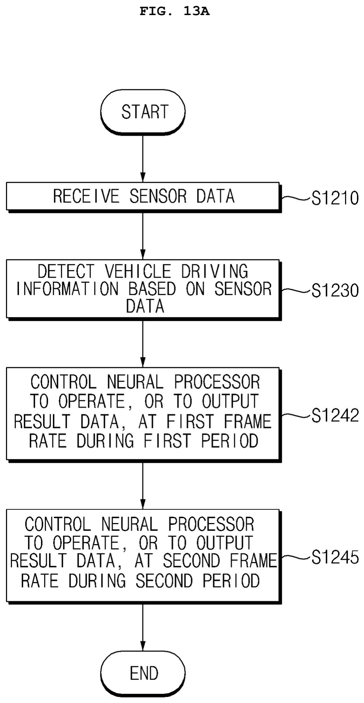

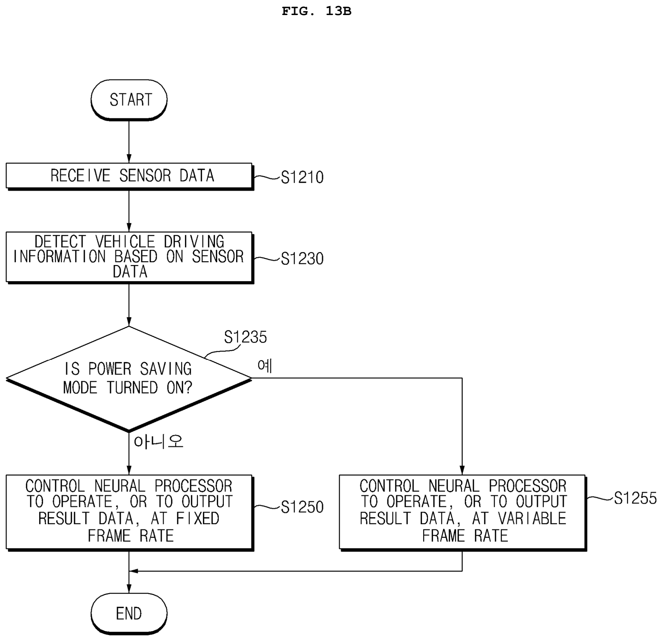

FIGS. 13A and 13B are diagrams illustrating various exemplary flowcharts illustrating a method of operating a signal processing device according to an embodiment of the present disclosure.

FIG. 13A is a flowchart illustrating another example of a method of operating a signal processing device according to an embodiment of the present disclosure.

Referring to FIG. 13A, the signal processing device 170 according to an embodiment of the present disclosure receives sensor data from the sensor device 700 (S1210). Operation 1210 (S1210) can correspond to operation 1210 (S1210) of FIG. 12.

Then, the neural processor 177 can be configured to detect vehicle driving information based on the received sensor data (S1230). Operation 1230 (S1230) can correspond to operation 1230 (S1230) of FIG. 12.

Next, the neural processor 177 can be configured to operate, or output result data, at a first frame rate during a first period (S1242).

Subsequently, the neural processor 177 can be configured to operate, or output result data, at a second frame rate during a second period after the first period (S1245).

For example, the first virtual machine 520 among the plurality of virtual machines 520 to 540 can be configured to control the neural processor 177 to operate, or to output result data, at the first frame rate during the first period based on the sensor data, and control the neural processor 177 to operate, or to output result data, at the second frame rate different from the first frame rate during the second period after the first period based on vehicle driving information obtained from the sensor data. Accordingly, it is possible to efficiently operate the neural processor 177.

FIG. 13B is a flowchart illustrating yet another example of a method of operating a signal processing device according to an embodiment of the present disclosure.

Referring to FIG. 13B, the signal processing device 170 according to an embodiment of the present disclosure receives sensor data from the sensor device 700 (S1210). Operation 1210 (S1210) can correspond to operation 1210 (S1210) of FIG. 12.

Then, the central processor 175 in the signal processing device 170 can be configured to determine whether a power saving mode is turned on (S1235), and in response to the power saving mode being turned off, the central processor 175 can be configured to control the neural processor 177 to operate, or to output result data, at a fixed frame rate based on the sensor data (S1250).

Specifically, in response to the power saving mode being turned off, the first virtual machine 520 among the plurality of virtual machines 520 to 540 can be configured to control the neural processor 177 to operate, or to output result data, at a fixed frame rate based on the sensor data.

Meanwhile, in response to the power saving mode being turned on in operation 1235 (S1235), the first virtual machine 520 can be configured to control the neural processor 177 to operate, or to output result data at a variable frame rate based on vehicle driving information obtained from the sensor data (S1255).

Specifically, in response to the power saving mode being turned on, the first virtual machine 520 among the plurality of virtual machines 520 to 540 can be configured to control the neural processor 177 to operate, or to output result data at a variable frame rate based on vehicle driving information obtained from the sensor data. Accordingly, it is possible to efficiently operate the neural processor 177 based on the vehicle driving information. Further, power consumption can be reduced.

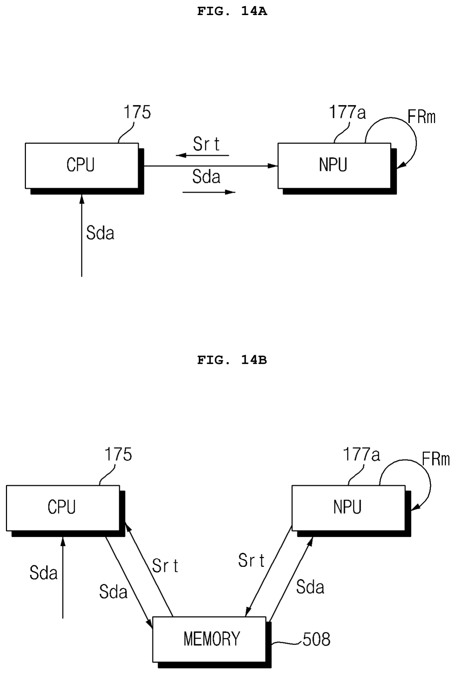

FIGS. 14A to 19 are diagrams referred to in the description of FIGS. 12 to 13B.

FIG. 14A is a diagram illustrating an example in which the central processor 175 in the signal processing device 170 receives sensor data, and transmits sensor data Sda to the first neural processor 177a.

Accordingly, the first neural processor 177a can be configured to receive the sensor data at a fixed frame rate and detect vehicle driving information based on the sensor data Sda.

In this case, the first neural processor 177a can be configured to change the frame rate based on the vehicle driving information.

In the drawing, it illustrated that the first neural processor 177a operates at a variable frame rate FRm.

Further, the first neural processor 177a can be configured to transmit result data Srt, including the vehicle driving information, to the central processor 175 based on the variable frame rate FRm. Accordingly, it is possible to efficiently operate the first neural processor 177a based on the vehicle driving information.

FIG. 14B is a diagram illustrating an example in which the central processor 175 in the signal processing device 170 receives sensor data and transmits sensor data Sda to the first neural processor 177a via the shared memory 508.

Accordingly, the shared memory 508 and the first neural processor 177a can be configured to receive the sensor data Sda at a fixed frame rate.

Further, the first neural processor 177a can be configured to detect vehicle driving information based on the sensor data Sda.

In this case, the first neural processor 177a can be configured to change the frame rate based on the vehicle driving information.

In the drawing, it is illustrated that the first neural processor 177a operates at a variable frame rate FRm.

Further, the first neural processor 177a can be configured to transmit result data Srt, including the vehicle driving information, to the central processor 175 via the shared memory 508 based on the variable frame rate FRm. Accordingly, it is possible to efficiently operate the first neural processor 177a based on the vehicle driving information.

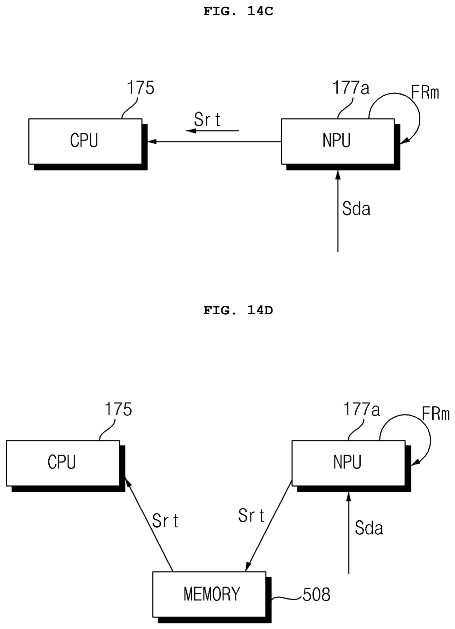

FIG. 14C is a diagram illustrating an example in which the first neural processor 177a in the signal processing device 170 receives sensor data.

Accordingly, the first neural processor 177a can be configured to receive the sensor data at a fixed frame rate, and detect vehicle driving information based on the sensor data Sda.

In this case, the first neural processor 177a can be configured to change the frame rate based on the vehicle driving information.

In the drawing, it is illustrated that the first neural processor 177a operates at a variable frame rate FRm.

Further, the first neural processor 177a can be configured to transmit result data Srt, including the vehicle driving information, to the central processor 175 based on the variable frame rate FRm. Accordingly, it is possible to efficiently operate the first neural processor 177a based on the vehicle driving information.

FIG. 14D is a diagram illustrating an example in which the first neural processor 177a in the signal processing device 170 receives sensor data.

Accordingly, the shared memory 508 can be configured to receive sensor data Sda at a fixed frame rate.

Further, the first neural processor 177a can be configured to detect vehicle driving information based on the sensor data Sda.

In this case, the first neural processor 177a can be configured to change the frame rate based on the vehicle driving information.

In the drawing, it is illustrated that the first neural processor 177a operates at a variable frame rate FRm.

Further, the first neural processor 177a can be configured to transmit result data Srt, including the vehicle driving information, to the central processor 175 via the shared memory 508 based on the variable frame rate FRm. Accordingly, it is possible to efficiently operate the first neural processor 177a based on the vehicle driving information.

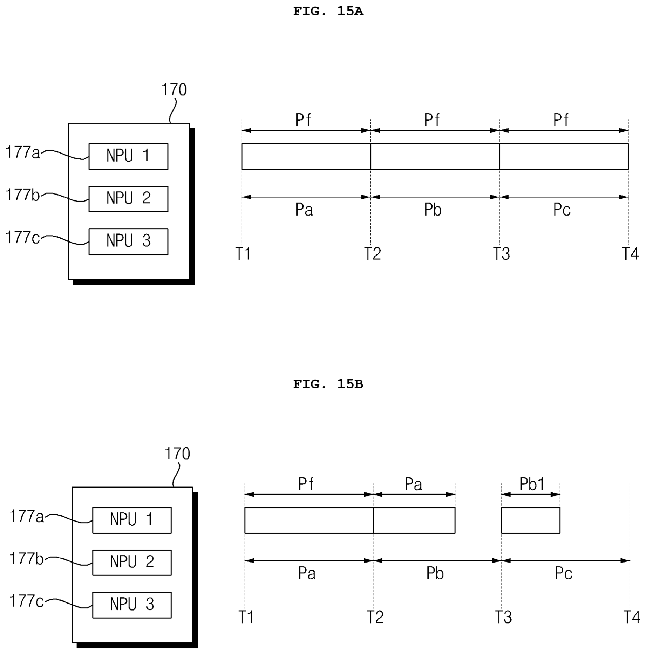

FIG. 15A is a diagram illustrating an example of operation of the first neural processor 177a among the plurality of neural processors in the signal processing device 170.

Referring to FIG. 15A, the first neural processor 177a can operate at a fixed frame rate Pf during periods Pa, Pb, and Pc.

FIG. 15B is a diagram illustrating another example of operation of the first neural processor 177a among the plurality of neural processors in the signal processing device 170.

Referring to FIG. 15B, the first neural processor 177a can be configured to operate at a fixed frame rate Pf during a first period Pa, operate at a variable frame rate Pa during a second period Pb, and operate at another variable frame rate Pb1 during a third period Pc.

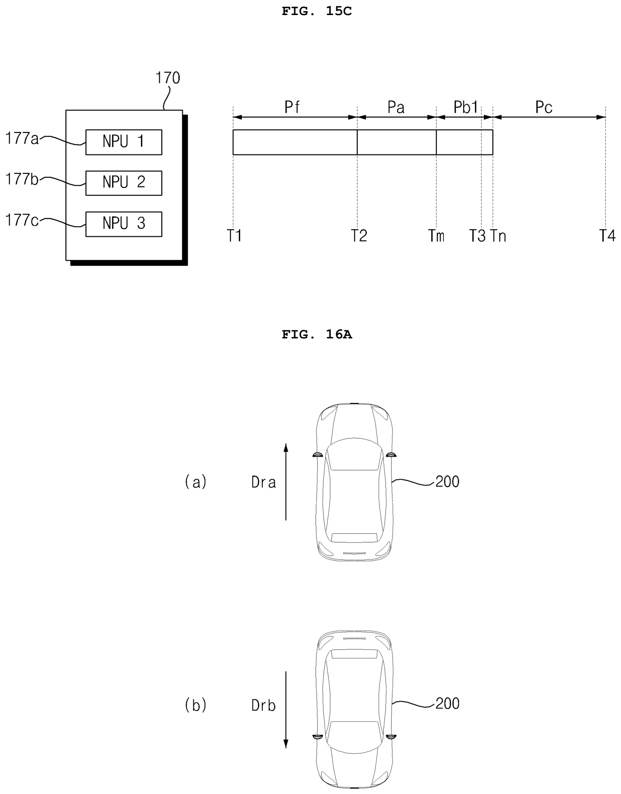

FIG. 15C is a diagram illustrating yet another example of operation of the first neural processor 177a among the plurality of neural processors in the signal processing device 170.

Referring to FIG. 15C, the first neural processor 177a can be configured to operate at a fixed frame rate Pf during a first period Pa, and then operate at a variable frame rate Pa and thereafter operate at another variable frame rate Pb1.

In this case, unlike FIG. 15B, the first neural processor 177a can be configured to operate continuously without idle time at the frame rates Pf, Pa, and Pb1, and then have an idle time of PC.

FIG. 16A is a diagram illustrating a case in which a vehicle moves forward and backward.

Referring to FIG. 16A, when the vehicle 200 moves forward DRa as illustrated in (a) of FIG. 16A, the first virtual machine 520 among the plurality of virtual machines 520 to 540 can be configured to control the neural processor 177 to operate, or to output result data, at a first frame rate.

Meanwhile, when the vehicle 200 moves backward as illustrated in (b) of FIG. 16A, the first virtual machine 520 among the plurality of virtual machines 520 to 540 can be configured to control the neural processor 177 to operate, or to output result data, at a second frame rate different from the first frame rate.

In this case, the second frame rate can be less than the first frame rate. Accordingly, when the vehicle moves backward DRb, power consumption can be reduced while efficiently operating the neural processor 177 based on the vehicle driving information.

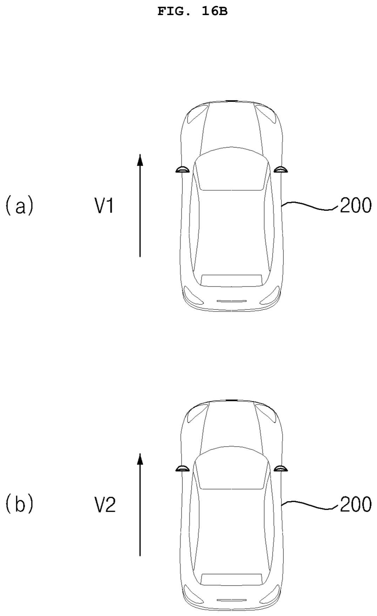

FIG. 16B is a diagram illustrating a case in which a vehicle speed is changed.

Referring to FIG. 16B, when the vehicle 200 travels at a first speed V1 as illustrated in (a) of FIG. 16B, the first virtual machine 520 among the plurality of virtual machines 520 to 540 can be configured to control the neural processor 177 to operate, or to output result data, at a first frame rate.

Meanwhile, in the case in which the vehicle 200 travels at a second speed V2 greater than the first speed V1 as illustrated in (b) of FIG. 16B, the first virtual machine 520 among the plurality of virtual machines 520 to 540 can be configured to control the neural processor 177 to operate, or to output result data, at a second frame rate different from the first frame rate.

In this case, the second frame rate can be greater than the first frame rate. Accordingly, when the vehicle 200 travels at the second speed greater than the first speed, it is possible to efficiently operate the neural processor 177 based on the vehicle driving information.

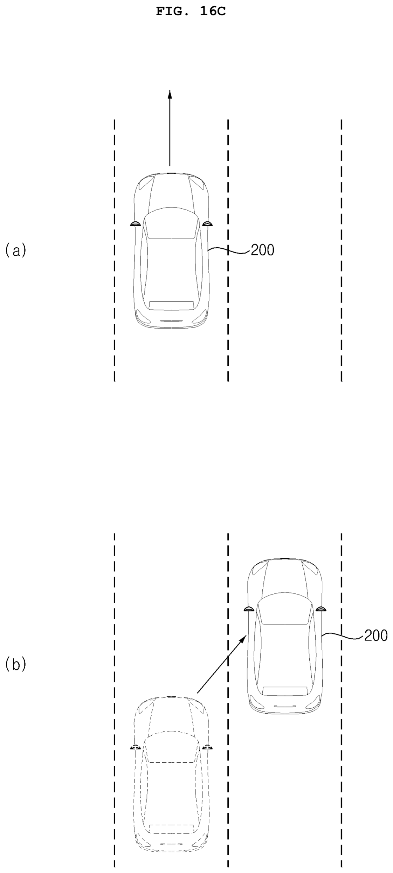

FIG. 16C is a diagram illustrating a case in which a vehicle changes lanes while traveling.

Referring to FIG. 16C, when the vehicle 200 travels straight as illustrated in (a) of FIG. 16C, the first virtual machine 520 among the plurality of virtual machines 520 to 540 can be configured to control the neural processor 177 to operate, or to output result data, at a first frame rate.

Meanwhile, when the vehicle 200 changes lanes as illustrated in (b) of FIG. 16C, the first virtual machine 520 among the plurality of virtual machines 520 to 540 can be configured to control the neural processor 177 to operate, or to output result data, at a second frame rate different from the first frame rate.

In this case, the second frame rate can be greater than the first frame rate. Accordingly, when the vehicle 200 changes lanes while traveling, it is possible to efficiently operate the neural processor 177 based on the vehicle driving information.

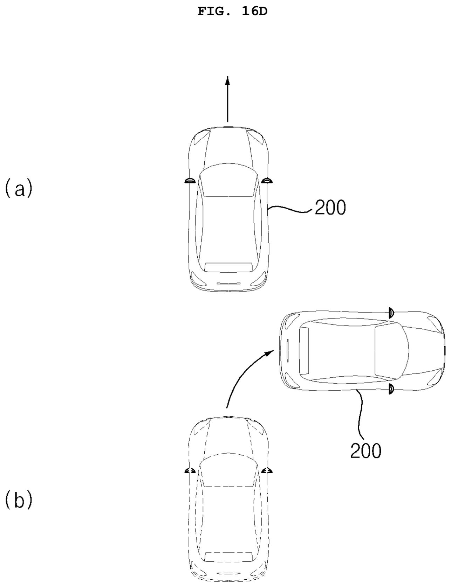

FIG. 16D is a diagram illustrating a case in which a vehicle turns right.

Referring to FIG. 16D, when the vehicle 200 travels straight as illustrated in (a) of FIG. 16D, the first virtual machine 520 among the plurality of virtual machines 520 to 540 can be configured to control the neural processor 177 to operate, or to output result data, at a first frame rate.

Meanwhile, when the vehicle 200 turns right as illustrated in (b) of FIG. 16D, the first virtual machine 520 among the plurality of virtual machines 520 to 540 can be configured to control the neural processor 177 to operate, or to output result data, at a second frame rate different from the first frame rate.

In this case, the second frame rate can be greater than the first frame rate. Accordingly, when the vehicle 200 turns right, it is possible to efficiently operate the neural processor 177 based on the vehicle driving information.

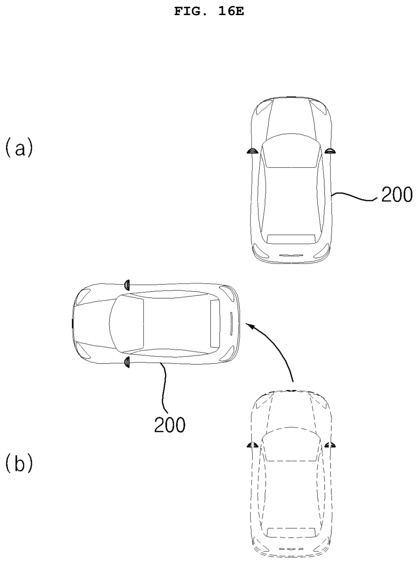

FIG. 16E is a diagram illustrating a case in which a vehicle turns left.

Referring to FIG. 16E, when the vehicle 200 travels straight as illustrated in (a) of FIG. 16E, the first virtual machine 520 among the plurality of virtual machines 520 to 540 can be configured to control the neural processor 177 to operate, or to output result data, at a first frame rate.

Meanwhile, when the vehicle 200 turns left as illustrated in (b) of FIG. 16E, the first virtual machine 520 among the plurality of virtual machines 520 to 540 can be configured to control the neural processor 177 to operate, or to output result data, at a second frame rate different from the first frame rate.

In this case, the second frame rate can be greater than the first frame rate. Accordingly, when the vehicle 200 turns left, it is possible to efficiently operate the neural processor 177 based on the vehicle driving information.

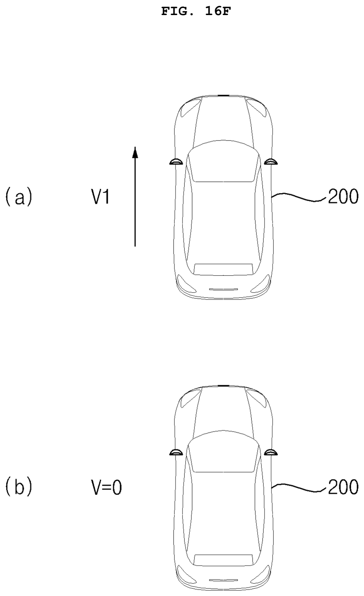

FIG. 16F is a diagram illustrating a case in which a vehicle stops while traveling.

Referring to FIG. 16F, when the vehicle 200 travels as illustrated in (a) of FIG. 16F, the first virtual machine 520 among the plurality of virtual machines 520 to 540 can be configured to control the neural processor 177 to operate, or to output result data, at a first frame rate.

Meanwhile, when the vehicle 200 stops as illustrated in (b) of FIG. 16F, the first virtual machine 520 among the plurality of virtual machines 520 to 540 can be configured to control the neural processor 177 to operate, or to output result data, at a second frame rate different from the first frame rate.

In this case, the second frame rate can be less than the first frame rate. Accordingly, when the vehicle 200 stops while traveling, power consumption can be reduced while efficiently operating the neural processor 177 based on the vehicle driving information.

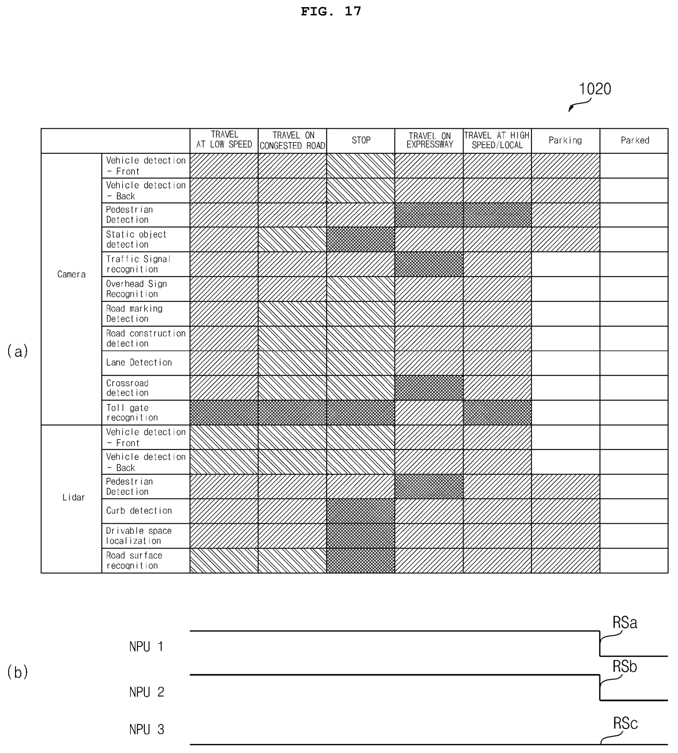

FIG. 17 is a diagram referred to in the description of operation of first and second neural processors 177a and 177b among the plurality of neural processors 177a to 177c in the signal processing device 170 according to an embodiment of the present disclosure.

Referring to FIG. 17, the signal processing device 170 according to an embodiment of the present disclosure of FIGS. 11A to 11D continuously receives data from the camera device 195, the sensor device 700, the transceiver 120, or the lidar device (not shown), and performs various signal processing operations based on the received data.

In FIG. 17, (a) illustrates an example in which the first and second neural processors 177a and 177b among the plurality of neural processors 177a to 177c in the signal processing device 170 according to an embodiment of the present disclosure receive the camera data from the camera device 195 and perform front vehicle detection, back vehicle detection, pedestrian detection, static object detection, traffic signal detection, overhead sign recognition, road marking detection, road construction detection, lane detection, crossroad detection, toll gate recognition, and the like based on the received camera data.

Meanwhile, (a) of FIG. 17 illustrates an example in which the first and second neural processors 177a and 177b among the plurality of neural processors 177a to 177c in the signal processing device 170 according to an embodiment of the present disclosure receive the lidar data from the lidar device (not shown) and perform front vehicle detection, back vehicle detection, pedestrian detection, curve detection, drivable space localization, road surface recognition, and the like based on the received lidar data.

Meanwhile, in the drawing, it is illustrated that the first and second neural processors 177a and 177b among the plurality of neural processors 177a to 177c in the signal processing device 170 according to an embodiment of the present disclosure perform the above various detection or recognition operations based on the camera data or the lidar data, and particularly, can be configured to operate, or output result data, at a variable frame rate based on the vehicle driving information.

In the drawing, it is illustrated that the frame rate for toll gate recognition decreases based on the camera rate when the vehicle 200 travels at a low speed.

Meanwhile, in the drawing, it is illustrated that the frame rate for road marking detection, road construction detection, lane detection, crossroad detection, toll gate recognition, and the like decreases based on the camera data when the vehicle 200 travels on a congested road or stops.

Meanwhile, in the drawing, it is illustrated that the frame rate for pedestrian detection decreases based on the camera data when the vehicle 200 travels on an expressway or travels at a high speed.

Meanwhile, in the drawing, it is illustrated that the frame rate is lowest for traffic signal detection, overhead sign recognition, road marking detection, road construction detection, lane detection, crossroad detection, toll gate recognition, and the like when the vehicle 200 is in the process of parking. Accordingly, it is possible to efficiently operate the neural processor 177 based on the vehicle driving information obtained from the camera data.

Meanwhile, in the drawing, it is illustrated that the frame rate for front vehicle detection, back vehicle detection, road surface recognition, and the like decreases based on lidar data when the vehicle 200 travels at a low speed or on a congested road.

Meanwhile, in the drawing, it is illustrated that the frame rate for pedestrian detection decreases based on the lidar data when the vehicle 200 travels on an expressway or travels at a high speed.

Meanwhile, in the drawing, it is illustrated that the frame rate for front vehicle detection, back vehicle detection, and the like decreases when the vehicle 200 is in the process of parking. Accordingly, it is possible to efficiently operate the neural processor 177 based on the vehicle driving information obtained from the lidar data.

Meanwhile, only the first and second neural processors 177a and 177b among the plurality of neural processors 177a to 177c operate as illustrated in (a) of FIG. 17, such that significant loads RSa and RSb are imposed on the first and second neural processors 177a and 177b among the plurality of neural processors 177a to 177c as illustrated in (b) of FIG. 17, but there is an effect in that processing load RSc on the third neural processor 177c is significantly reduced. Accordingly, power consumption of the third neural processor 177c can be greatly reduced.

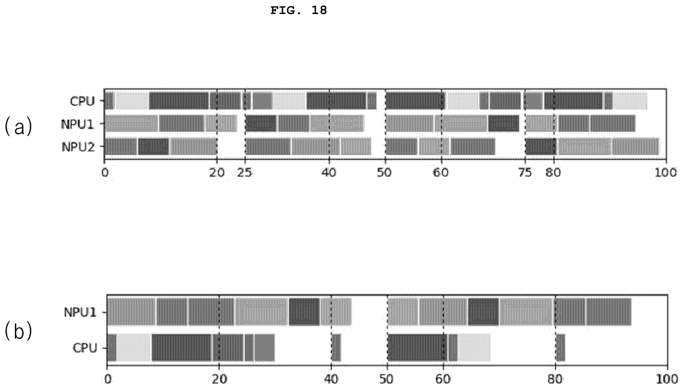

FIG. 18 is a diagram illustrating an example of varying a frame rate of a neural processor.

Referring to FIG. 18, as illustrated in (a) of FIG. 18, the frame rate of the central processor 175 and the first and second neural processors 177a and 177b in the signal processing device 170 can be 30 or 40 frame per second (fps).

Meanwhile, as illustrated in (b) of FIG. 18, the frame rate of the central processor 175 and the first neural processor 177a in the signal processing device 170 can be 10 or 20 frame per second (fps).

Referring to (b) of FIG. 18 compared to (a) of FIG. 18, the second neural processor 177b cannot operate, such that power consumption can be reduced. Further, the neural processors and the like operate at a variable frame rate, such that it is possible to efficiently operate the neural processors.

Meanwhile, (a) of FIG. 18 illustrates the operation of the central processor 175 and the first and second neural processors 177a and 177b when the vehicle 200 moves forward as illustrated in (a) of FIG. 16A, and (b) of FIG. 18 illustrates the operation of the central processor 175 and the first neural processor 177a when the vehicle 200 moves backward as illustrated in (b) of FIG. 16A.

Alternatively, (a) of FIG. 18 illustrates the operation of the central processor 175 and the first and second neural processors 177a and 177b when the vehicle 200 travels at a second speed V2 as illustrated in (b) of FIG. 16B, and (b) of FIG. 18 illustrates the operation of the central processor 175 and the first neural processor 177a when the vehicle 200 travels at a first speed V1 as illustrated in (a) of FIG. 16B.

Alternatively, (a) of FIG. 18 illustrates the operation of the central processor 175 and the first and second neural processors 177a and 177b when the vehicle 200 travels straight as illustrated in (a) of FIG. 16C, and (b) of FIG. 18 illustrates the operation of the central processor 175 and the first neural processor 177a when the vehicle 200 changes lanes while traveling as illustrated in (b) of FIG. 16C.

Alternatively, (a) of FIG. 18 illustrates the operation of the central processor 175 and the first and second neural processors 177a and 177b when the vehicle 200 travels straight as illustrated in (a) of FIG. 16D or (a) of FIG. 16E, and (b) of FIG. 18 illustrates the operation of the central processor 175 and the first neural processor 177a when the vehicle 200 turns left or right as illustrated in (b) of FIG. 16D or (b) of FIG. 16E.

Alternatively, (a) of FIG. 18 illustrates the operation of the central processor 175 and the first and second neural processors 177a and 177b when the vehicle 200 stops as illustrated in (b) of FIG. 16F, and (b) of FIG. 18 illustrates the operation of the central processor 175 and the first neural processor 177a when the vehicle 200 travels as illustrated in (a) of FIG. 16F.

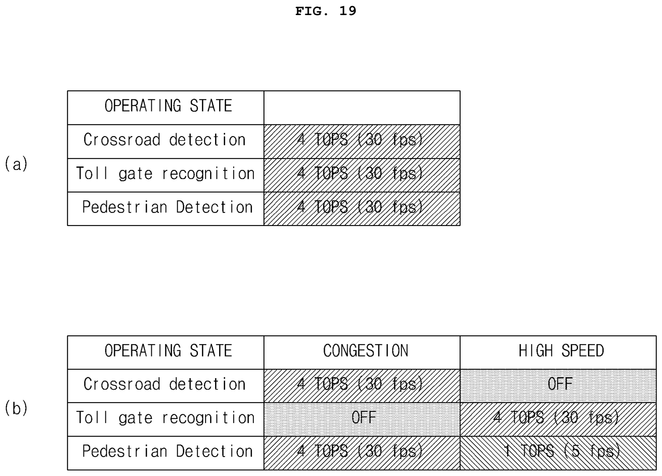

FIG. 19 is a diagram illustrating comparison between the case where the neural processor 177 operates at a fixed frame rate and the case where the neural processor 177 operates at a variable frame rate.

Referring to (a) of FIG. 19, the neural processor 177 operates at a fixed frame rate of 30 fps when performing crossroad detection, toll gate recognition, and pedestrian detection based on the camera data. In this case, there is a drawback in that significant processing load is imposed on the neural processor 177, and the neural processor 177 operates at the fixed frame rate, thereby resulting in significant power consumption.

Referring to (b) of FIG. 19, the neural processor 177 operates at a variable frame rate when performing crossroad detection, toll gate recognition, and pedestrian detection based on the camera data.

For example, when the vehicle travels on a congested road, the neural processor 177 can be configured to turn off the toll gate recognition. Accordingly, it is possible to efficiently operate the neural processor 177. Further, power consumption can be reduced.

In another example, when the vehicle travels on an expressway, the neural processor 177 can be configured to turn off the crossroad detection. Accordingly, it is possible to efficiently operate the neural processor 177. Further, power consumption can be reduced.

In yet another example, when the vehicle travels on an expressway, the neural processor 177 can be configured to turn off the pedestrian detection or operate at the lowest frame rate of 5 fps. Accordingly, it is possible to efficiently operate the neural processor 177. Further, power consumption can be reduced.

Meanwhile, separately from the description of FIGS. 11A to 19, the first virtual machine 520 among the plurality of virtual machines 520 to 540 can be configured to control the first neural processor 177a of at least one neural processor 177 to operate, or to output result data at a variable frame rate based on the sensor data, and control the second neural processor 177b of at least one neural processor 177 to operate, or to output result data at a variable frame rate based on the camera data from the camera device 195 in the vehicle. Accordingly, it is possible to efficiently operate the neural processor 177 based on the vehicle driving information. Further, power consumption can be reduced.

Meanwhile, the first virtual machine 520 among the plurality of virtual machines 520 to 540 can be configured to control the first neural processor 177a to operate, or to output result data, at a first frame rate during a first period, and control the second neural processor 177b to operate, or to output result data, at a second frame rate during the first period. Accordingly, it is possible to efficiently operate the neural processor 177 based on the vehicle driving information. Further, power consumption can be reduced.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising:
at least one neural processor; and
a central processor configured to execute a hypervisor,
wherein the central processor is configured to execute a plurality of virtual machines on the hypervisor,
wherein a first virtual machine among the plurality of virtual machines is configured to control the neural processor to operate, or to output result data at a variable frame rate based on sensor data from a sensor device in a vehicle.

2. The signal processing device of claim 1, wherein the neural processor is configured to detect vehicle driving information based on the sensor data, and to operate at the variable frame rate, or to output the result data including the vehicle driving information at the variable frame rate, based on the vehicle driving information.

3. The signal processing device of claim 1, wherein the neural processor is configured to receive the sensor data at a fixed frame rate, to detect vehicle driving information based on the sensor data, and to operate at the variable frame rate, or to output the result data including the vehicle driving information at the variable frame rate, based on the vehicle driving information.

4. The signal processing device of claim 1, wherein the first virtual machine among the plurality of virtual machines is configured to control the neural processor to operate, or to output the result data, at a first frame rate during a first period based on the sensor data, and configured to control the neural processor to operate, or to output the result data, at a second frame rate different from the first frame rate during a second period after the first period based on the vehicle driving information obtained from the sensor data.

5. The signal processing device of claim 1, wherein the first virtual machine among the plurality of virtual machines is configured to:
in response to a power saving mode being turned off, control the neural processor to operate, or to output the result data, at a fixed frame rate based on the sensor data; and
in response to the power saving mode being turned on, control the neural processor to operate, or to output the result data, at a variable frame rate based on the vehicle driving information obtained from the sensor data.

6. The signal processing device of claim 1, wherein the first virtual machine among the plurality of virtual machines is configured to:
in response to the vehicle moving forward, control the neural processor to operate, or to output the result data, at a first frame rate; and
in response to the vehicle moving backward, control the neural processor to operate, or to output the result data, at a second frame rate different from the first frame rate based on the vehicle driving information obtained from the sensor data.

7. The signal processing device of claim 1, wherein the first virtual machine among the plurality of virtual machines is configured to:
in response to the vehicle traveling at a first speed, control the neural processor to operate, or to output the result data, at a first frame rate; and
in response to the vehicle traveling at a second speed greater than the first speed, control the neural processor to operate, or to output the result data, at a second frame rate different from the first frame rate based on the vehicle driving information obtained from the sensor data.

8. The signal processing device of claim 1, wherein the first virtual machine among the plurality of virtual machines is configured to:
in response to the vehicle traveling straight, control the neural processor to operate, or to output the result data, at a first frame rate; and
in response to the vehicle changing lanes while traveling, control the neural processor to operate, or to output the result data, at a second frame rate different from the first frame rate based on the vehicle driving information obtained from the sensor data.

9. The signal processing device of claim 1, wherein the first virtual machine among the plurality of virtual machines is configured to:
in response to the vehicle traveling straight, control the neural processor to operate, or to output the result data, at a first frame rate; and
in response to the vehicle turning left or right, control the neural processor to operate, or to output the result data, at a second frame rate different from the first frame rate based on the vehicle driving information obtained from the sensor data.

10. The signal processing device of claim 1, wherein the first virtual machine among the plurality of virtual machines is configured to:
in response to the vehicle traveling, control the neural processor to operate, or to output the result data, at a first frame rate; and
in response to the vehicle stopping, control the neural processor to operate, or to output the result data, at a second frame rate different from the first frame rate based on the vehicle driving information obtained from the sensor data.

11. The signal processing device of claim 1, further comprising a shared memory,
wherein the central processor is configured to transmit the sensor data to the neural processor by using the shared memory, and the neural processor is configured to transmit the result data to the central processor by using the shared memory.

12. The signal processing device of claim 11, wherein a frame rate of the sensor data written to the shared memory is a fixed frame rate, and a frame rate of the result data written to the shared memory is a variable frame rate.

13. The signal processing device of claim 2, wherein the first virtual machine is configured to receive the vehicle driving information detected by the neural processor and to execute an ADAS engine or an autonomous driving engine based on the vehicle driving information.

14. The signal processing device of claim 2, wherein a second virtual machine among the plurality of virtual machines is configured to receive the vehicle driving information from the first virtual machine and to execute an ADAS engine or an autonomous driving engine based on the vehicle driving information, and
wherein a third virtual machine among the plurality of virtual machines is configured to receive the vehicle driving information from the first virtual machine and to execute an augmented reality engine based on the vehicle driving information.

15. The signal processing device of claim 14, wherein the second virtual machine is configured to operate for a first display, and the third virtual machine is configured to operate for a second display.

16. The signal processing device of claim 1, wherein the first virtual machine among the plurality of virtual machines is configured to control a first neural processor among the at least one neural processor to operate, or to output result data at a variable frame rate based on the sensor data, and control a second neural processor among the at least one neural processor to operate, or to output result data at a variable frame rate based on camera data from a camera device in a vehicle.

17. The signal processing device of claim 16, wherein the first virtual machine among the plurality of virtual machines is configured to control the first neural processor to operate, or to output result data, at a first frame rate during a first period, and control the second neural processor to operate, or to output result data, at a second frame rate during the first period.

18. A signal processing device comprising:
at least one neural processor; and
a central processor configured to execute a hypervisor,
wherein the central processor is configured to execute a plurality of virtual machines on the hypervisor,
wherein in response to a power saving mode being turned off, a first virtual machine among the plurality of virtual machines is configured to control the neural processor to operate, or to output result data, at a fixed frame rate based on sensor data from a sensor device in a vehicle, and in response to the power saving mode being turned on, control the neural processor to operate, or to output the result data, at a variable frame rate based on vehicle driving information obtained from the sensor data.

19. The signal processing device of claim 18, wherein the first virtual machine among the plurality of virtual machines is configured to:
in response to the vehicle moving forward while the power saving mode is turned on, control the neural processor to operate, or to output the result data, at a first frame rate; and
in response to the vehicle moving backward while the power saving mode is turned on, control the neural processor to operate, or to output the result data, at a second frame rate different from the first frame rate based on the vehicle driving information obtained from the sensor data.

20. A vehicle display apparatus comprising:
a sensor device; and
a signal processing device configured to detect vehicle driving information based on sensor data from the sensor device,
wherein the signal processing device comprises the signal processing device of any one of claims 1 to 19.
